# EUROPEAN PATENT SPECIFICATION

(11) **EP 4 406 681 B1**
(45) Date of publication and mention of the grant of the patent: **01.10.2025**
(21) Application number: 22894411.2
(22) Date of filing: 09.09.2022
(51) Int. Cl.: B23D 45/14, B27B 5/29, B23D 45/04

(54) **INCLINED SAW**
SCHRÄGSÄGE
SCIE INCLINÉE

(30) Priority: 22.11.2021 CN 202111381760; 22.11.2021 CN 202111395684; 22.11.2021 CN 202122875606 U; 27.07.2022 CN 202210893092; 27.07.2022 CN 202210893081
(43) Date of publication of application: 31.07.2024
(73) Proprietor: Nanjing Chervon Industry Co., Ltd., Nanjing, Jiangsu 211106 (CN)
(72) Inventor: SUN, Fangyong, Nanjing, Jiangsu 211106 (CN); ZHANG, Changning, Nanjing, Jiangsu 211106 (CN); GAN, Xingnian, Nanjing, Jiangsu 211106 (CN); XU, Guofang, Nanjing, Jiangsu 211106 (CN); CHEN, Zhifeng, Nanjing, Jiangsu 211106 (CN); RYBKA, Matthew, Nanjing, Jiangsu 211106 (CN)
(74) Representative: Sun, Yiming
(86) International application number: PCT/CN2022/118210
(87) International publication number: WO 2023/087872

(56) References cited:
- EP-A1- 1 818 144
- CN-A- 102 632 292
- CN-A- 105 772 847
- CN-A- 110 099 774
- CN-U- 209 189 923
- US-A1- 2010 269 662
- US-A1- 2010 269 662
- US-B2- 10 710 267

## Description

### TECHNICAL FIELD

The present invention relates to a power tool and, in particular, to a miter saw.

### BACKGROUND

A miter saw is a table tool and can perform cutting operations at a certain inclined angle. The miter saw typically includes a cutting system that can rotate to be inclined and a rotatable workbench. All the preceding rotation actions need to be controlled to a certain extent. In the related art, the control of the rotation is complicated to operate and cumbersome to use, affecting user experience and reducing work efficiency.

Document US 10710267 B2 discloses a miter saw according to the preamble of claim 1, and in particular a bevel angle lock and detent system for a miter saw includes a first locking unit fixed relative to the turntable and a second locking unit coupled to a bevel arm of the miter saw. An actuator is moveable between a first position and a second position to move the second locking unit relative to the first locking unit.

Document US 20100269662 A1 discloses a miter saw which comprises a base and a bevel support pivotable with respect to the base. A cutting blade is supported by the bevel support and moveable between a plurality of cutting positions. The miter saw further comprises a bevel stop member moveably connected to the base between a plurality of stop positions.

### SUMMARY

An object of the present invention is to provide a power tool, a miter saw that is convenient and quick to operate and has high locking efficiency.

To achieve the preceding object, the present invention is defined in the independent claim attached. Preferred embodiments of the invention are defined in dependent claims attached."

The present invention provides a miter saw with multiple functions integrated into the same operation member, which is simple and convenient to operate and improves user efficiency and user experience.

### BRIEF DESCRIPTION OF DRAWINGS

FIG. 1 is a structural view of example one of the present invention;
FIG. 2 is a top view of example one of the present invention;
FIG. 3 is a partial structural view of a workbench and a first locking mechanism in example one of the present invention;
FIG. 4 is a partial enlarged view of a B structure in FIG. 3;
FIG. 5 is a side view of structures in FIG. 3;
FIG. 6 is a sectional view of structures in FIG. 3 on an R-R plane when a first operation member is at a first position;
FIG. 7 is a sectional view of structures in FIG. 3 on an R-R plane when a first operation member is at a second position;
FIG. 8 is a sectional view of structures in FIG. 3 on an R-R plane when a first operation member is at a third position;
FIG. 9 is a partial structural view of a rack and a first locking mechanism in example one of the present invention;
FIG. 10 is a view of part of structures of a first locking mechanism in example one of the present invention;
FIG. 11 is a partial enlarged view of a structure A in FIG. 1;

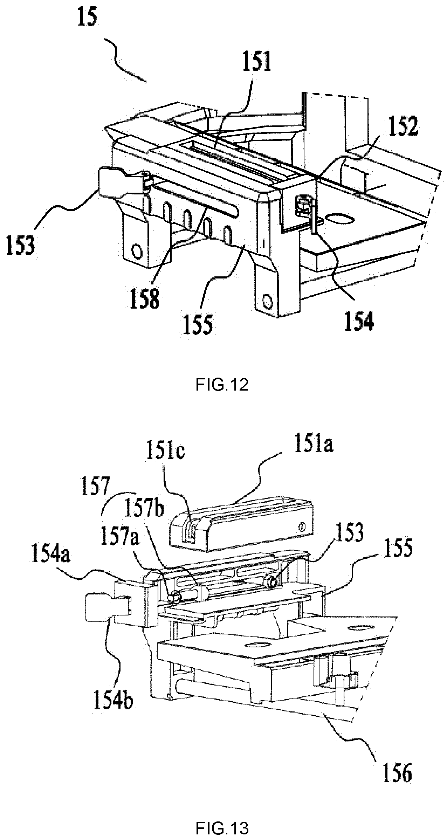

FIG. 12 is a partial structural view of an extension mechanism in example one of the present invention;
FIG. 13 is a partial exploded view of an extension mechanism in example one of the present invention;
FIG. 14 is a schematic view showing the use of an extension mechanism in example one of the present invention;
FIG. 15 is a structural view of example one of the present invention from another perspective;

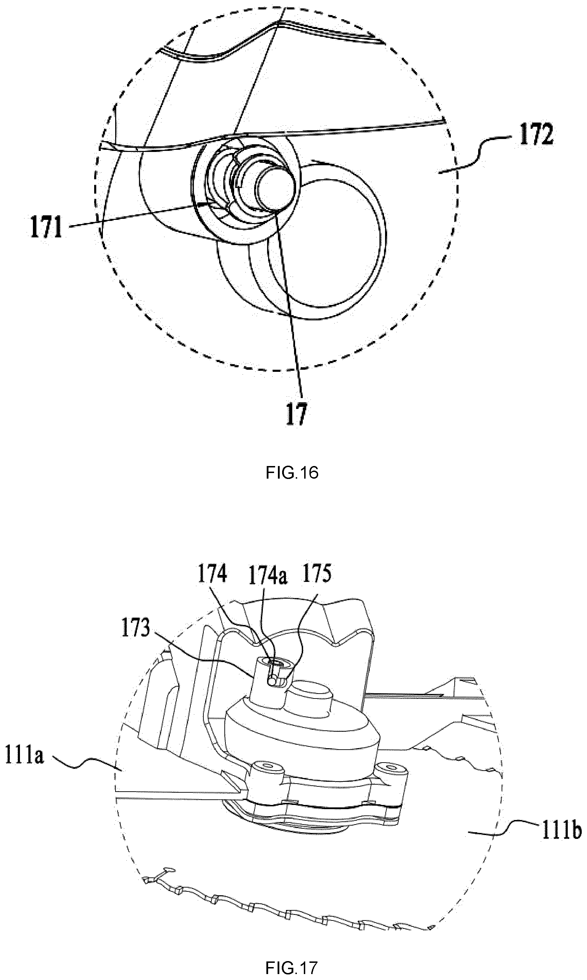

FIG. 16 is a partial enlarged view of a C structure in FIG. 15 in the related art;
FIG. 17 is a partial enlarged view of a C structure in FIG. 15 in example one of the present invention;
FIG. 18 is a structural view of example two of the present invention;
FIG. 19 is a structural view of a first locking mechanism in example two of the present invention;
FIG. 20 is a top view of a first locking mechanism in example two of the present invention;
FIG. 21 is a schematic view of a clutch structure in example two of the present invention;
FIG. 22 is a structural view of a workbench and a positioning mechanism in example two of the present invention;
FIG. 23 is a partial schematic view of a workbench and a positioning mechanism in example two of the present invention;
FIG. 24 is a sectional view on a Q-Q plane in FIG. 22;
FIG. 25 is a partial structural view of an auxiliary table assembly in example two of the present invention;
FIG. 26 is a top view of part of structures of example two of the present invention;
FIG. 27 is a schematic view of an S-S section in FIG. 26;
FIG. 28 is a partial schematic view of a second locking mechanism in the present invention;
FIG. 29 is a structural view of example three in the present invention;
FIG. 30 is a schematic diagram of a top view of FIG. 29;
FIG. 31 is a schematic diagram of an exploded view of FIG. 29 from another perspective;
FIG. 32 is a structural view of part of components in FIG. 29;
FIG. 33 is a structural view of the part of components in FIG. 32 from a top view;
FIG. 34 is a structural view of the part of components in FIG. 32 from a bottom view;
FIG. 35 is a structural view of part of structures in FIG. 32, where an operation handle is at a second position;
FIG. 36 is a structural view of a first locking mechanism in example three of the present invention, where an operation handle is at a second position;
FIG. 37 is a schematic view of FIG. 36 from another perspective;
FIG. 38 is a structural view of a first locking mechanism in example one of the present invention, where an operation handle is at a first position;
FIG. 39 is a schematic view of FIG. 38 from another perspective;
FIG. 40 is a structural view of a first locking mechanism in example one of the present invention, where an operation handle is at a third position;
FIG. 41 is a schematic view of FIG. 40 from another perspective;
FIG. 42 is a schematic view of part of structures in FIG. 41;
FIG. 43 is a structural view of a workbench, a base, a second locking mechanism, a positioning mechanism, and an operation mechanism in example three of the present invention;
FIG. 44 is an exploded view of FIG. 43;
FIG. 45 is a schematic view of FIG. 43 from another perspective;
FIG. 46 is a sectional view along T-T in FIG. 45;
FIG. 47 is a sectional view along Y-Y in FIG. 45;
FIG. 48 is a schematic view of part of structures of the second locking mechanism, the positioning mechanism, and the operation mechanism in FIG. 43, where part of internal structures of a first trigger are shown, the first trigger is at a second position, and a second trigger is at a third position;
FIG. 49 is a schematic view of part of structures of the second locking mechanism, the positioning mechanism, and the operation mechanism in FIG. 43, where part of internal structures of a first trigger are shown, the first trigger is at a second position, and a second trigger is at a fourth position;
FIG. 50 is a schematic view of part of structures of the second locking mechanism, the positioning mechanism, and the operation mechanism in FIG. 43, where part of internal structures of a first trigger are shown, the first trigger is at a first position, and a second trigger is at a fourth position;
FIG. 51 is a schematic view of part of structures of a first operation portion in FIG. 43;
FIG. 52 is a structural view of a first operation portion and a second operation portion in example four of the present invention;
FIG. 53 is a schematic view of FIG. 52 from another perspective;
FIG. 54 is an exploded view of part of structures in FIG. 52;
FIG. 55 is a schematic view of part of structures of a first trigger in FIG. 52;
FIG. 56 is a schematic view of part of structures in FIG. 52 from another perspective;
FIG. 57 is a partial exploded view of a first operation portion and a second operation portion in example five of the present invention;
FIG. 58 is an exploded view of part of structures in FIG. 57;
FIG. 59 is a structural view of a first operation portion and a second operation portion in example six of the present invention;
FIG. 60 is a structural view of FIG. 57 from another perspective;
FIG. 61 is an exploded view of part of structures in FIG. 60;
FIG. 62 is a structural view of a first operation portion and a second operation portion in example seven of the present invention;
FIG. 63 is an exploded view of part of structures in FIG. 62;
FIG. 64 is a structural view of a first operation portion and a second operation portion in example eight of the present invention;
FIG. 65 is an exploded view of part of structures in FIG. 64 from another perspective;
FIG. 66 is a structural view of a first operation portion and a second operation portion in example nine of the present invention;
FIG. 67 is an exploded view of part of structures in FIG. 66; and
FIG. 68 is a structural view of an alternative example of a second transmission assembly in example nine of the present invention.

### DETAILED DESCRIPTION

The present invention is described below in detail in conjunction with drawings and examples.

In the description of the present invention, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present invention may be understood based on specific situations.

In the present invention, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

To clearly illustrate technical solutions of the present invention, an upper side, a lower side, a left side, a right side, a front side, and a rear side are defined in the drawings of the specification.

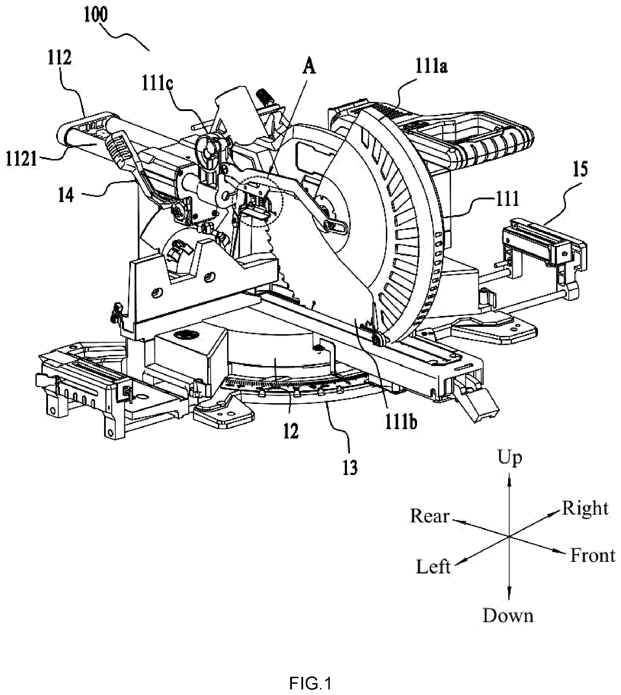

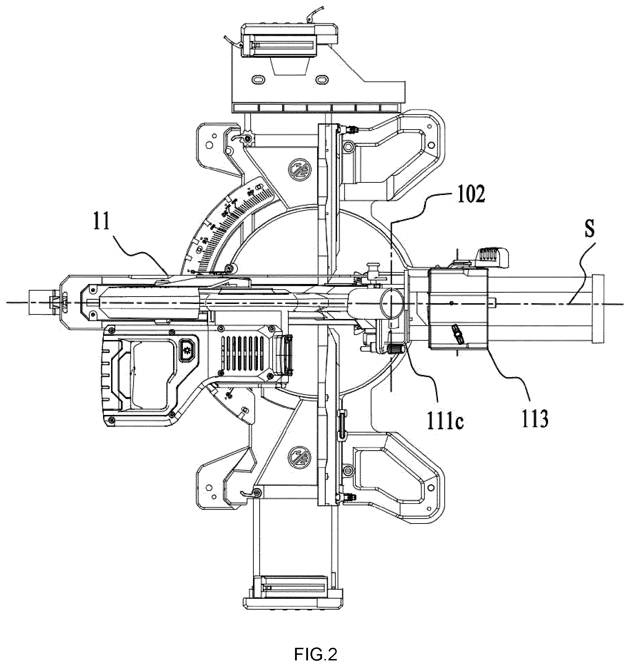

As shown in FIGS. 1 and 2, a miter saw 100 includes a base 13, a workbench 12, a cutting mechanism 11, an extension mechanism 15, and a first locking mechanism 14.

The base 13 is used for supporting the workbench 12, that is, the base 13 is used for supporting the entire miter saw 100. The miter saw 100 may be steadily placed on the ground or an operation plane through the base 13. Specifically, the base 13 is disposed under the workbench 12, and the cutting mechanism 11 is disposed on the workbench 12.

The cutting mechanism 11 includes a cutting assembly 111, a rack 113, and a guide rail assembly 112. The cutting assembly 111 includes a cutting member 111b and an electric motor. The cutting member 111b is used for implementing a cutting function of the miter saw 100, which is specifically a circular saw blade. The electric motor is configured to provide a power source and can drive the cutting member 111b to rotate in a cutting plane S so that the cutting member 111b cuts a workpiece placed on the workbench 12.

In this example, the cut assembly 111 further includes a first connector 111c connecting the cut assembly 111 to the guide rail assembly 112, and the cut assembly 111 is pivotally connected to the first connector 111c. That is, the cutting assembly 111 is rotatable about a working axis 102 so that the cutting member 111b gradually approaches the workpiece to perform a cutting operation or moves away from the workpiece after the cutting operation is completed.

In this example, the cutting assembly 111 further includes a shield 111a that covers at least part of the cutting member 111b. To meet a security requirement, the shield 111a further includes a first shield that is fixedly connected and a second shield that rotates relative to the first connector 111c. The first shield always surrounds at least part of the cutting member 111b. In the state where no cutting operation is performed, the second shield can surround at least part of the cutting member 111b and avoid exposing the cutting member 111b to a range that can be directly touched by a user. When the user operates the cutting assembly 111 to rotate about the working axis 102 and gradually approach the workpiece to perform the cutting operation, the second shield may gradually rotate away from the workbench or the cutting member 111b as the user operates the cutting assembly 111 so that the cutting member 111b can contact the workpiece to cut the workpiece. It is to be understood that the shield 111a may be fixedly connected to the first connector 111c. Walking wheels are further disposed at the lower end of the shield 111a in contact with the workbench 12. The walking wheels assist the shield 111a in moving backward and forward on the workbench 12.

The guide rail assembly 112 is disposed on the rack 113 and includes slide rails 1121. The rack 113 is formed with through holes for the guide rail assembly 112 to pass through, and each of the through holes has a certain depth. The slide rails 1121 are configured to pass through the preceding through holes 1331. A stopper is disposed at one end of a slide rail 1121 to prevent the guide rail assembly 112 from being disengaged from a through hole, and the other end of the slide rail 1121 is fixedly connected to the first connector 111c. Specifically, the guide rail assembly is further connected to a reset member that can reset the slide rail 1121, and the reset member may be a spring.

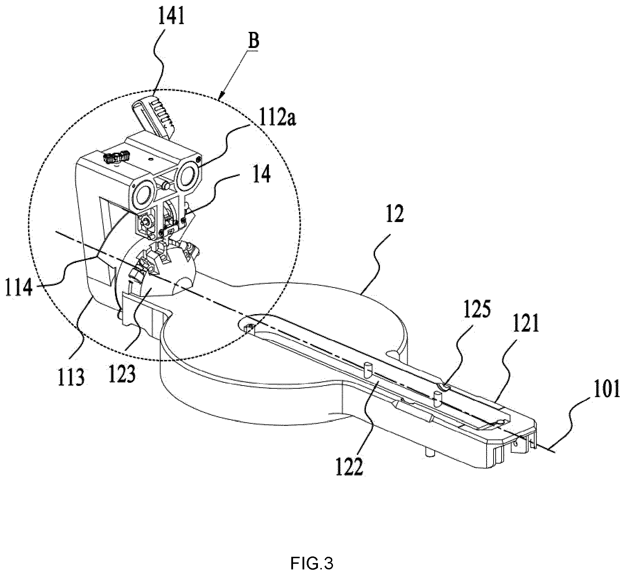

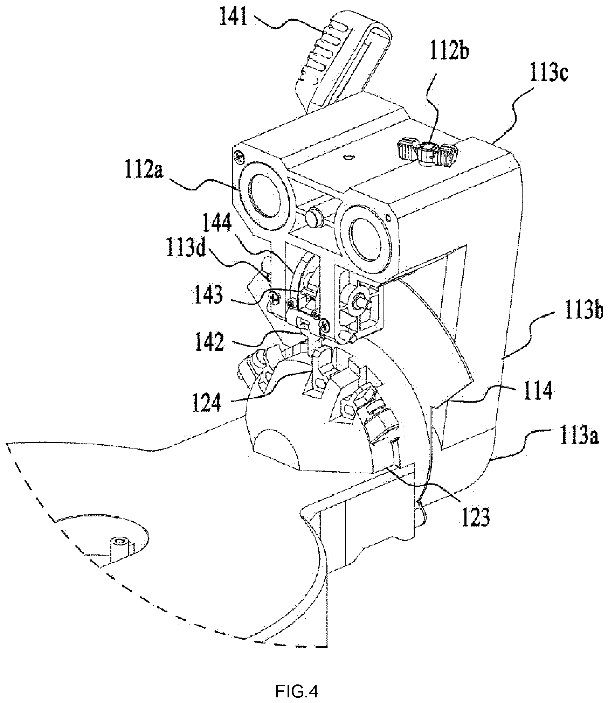

As shown in FIGS. 1 to 11, a first channel 121 that penetrates through the workbench 12 is further formed on the workbench 12 and extends in the cutting plane S. A first end of the first channel 121 is located in the workbench 12, and a second end of the first channel 121 extends to the outside of the workbench 12. The outside refers to the front end of the cutting assembly 111. The cutting member 111b may pass through the first channel 121 when cutting the workpiece and is at least partially accommodated in a first accommodation cavity 122 formed in the middle of the first channel 121. The workbench 12 and the second end of the first channel 121 support the walking wheels of the shield 111a. The walking wheels move on two sides of the first accommodation cavity 122, and positioning slots 125 are disposed on the edges of the first channel 121 close to the first accommodation cavity 122. Specifically, the positioning slots 125 are disposed at the second end of the first channel 121, that is, part of the first channel 121 extending out of the workbench 12. The shape of each of the positioning slots 125 is consistent with the shape of each of the walking wheels so that the walking wheels on the shield 111a exactly enter the positioning slots 125 when moving to this position. In this case, the cutting member 111b is located in the middle of the first channel 121, and the second operation member 112b is operated to lock the guide rail assembly 112.

A support base 123 is disposed on the side of the workbench 12 opposite to the first channel 121, that is, the support base 123 is disposed at the rear end of the cutting assembly 111. Specifically, the support base 123 is connected to the rack 113, and the rack 113 can support the cutting mechanism and drive the cutting mechanism to rotate relative to the workbench 12 about a first axis 101. In this example, the first axis 101 is in the cutting plane S, the structure of each of the workbench 12, the first channel 121, and the support base 123 is symmetrical with respect to the first axis 101, and the first channel 121 extends along the first axis 101.

The rack 113 successively includes a first pivot portion 113a, an extension portion 113b, and a second connector 113c that are mutually consecutive. The first pivot portion 113a is pivotally connected to the support base 123 and is used for transferring the rotation of the rack 113. The extension portion 113b extends upward relative to the workbench 12 and is connected to the first pivot portion 113a and the second connector 113c. The second connector 113c is formed with through holes 112a. In some examples, the width of the second connector 113c in a front and rear direction is greater than the width of the extension portion 113b in the front and rear direction so that the front end of the second connector 113c and the front end of the support base are approximately in the same vertical plane in the front and rear direction. In other words, the second connector 113c, the extension portion 113b, and the support base 123 may surround an accommodation space, and the first locking mechanism 14 is mostly disposed in the accommodation space. A bracket 113d is formed under the second connector 113c and disposed in the accommodation space, and most of the structures of the first locking mechanism 14 are disposed in the bracket 113d.

The first locking mechanism 14 includes at least a first state, a second state, and a third state. When the first locking mechanism 14 is in the first state, the first locking mechanism 14 can lock the rotation of the cutting mechanism relative to the workbench about the first axis 101 so that the cutting mechanism is stationary relative to the support base 123. When the first locking mechanism 14 is in the second state, the cutting mechanism rotates relative to the workbench about the first axis 101 so that the cutting mechanism rotates relative to the support base 123. When the first locking mechanism 14 is in the third state, the first locking mechanism 14 can mate with the support base 123 to position the rotation of the cutting mechanism. In other words, when the first locking mechanism 14 is in the third state, the cutting mechanism can stop, at a set position, the rotation along a direction. Specifically, the cutting mechanism may continue moving along another direction, and the point at which the movement is stopped is a positioning point. Alternatively, the cutting mechanism is movable within a certain range, and in this case, two adjacent positioning points exist.

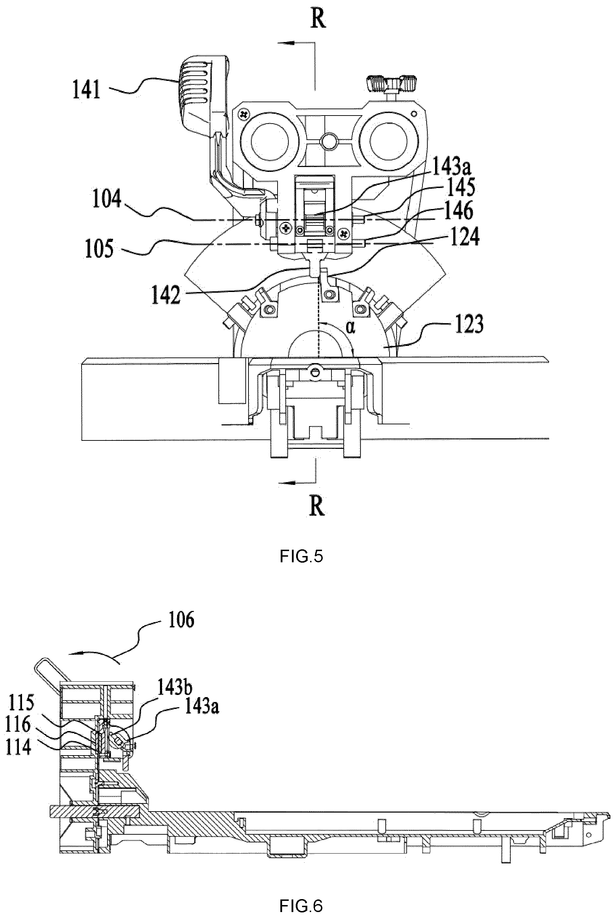

According to the invention,the first locking mechanism 14 includes a first operation member 141, a positioning pin 142, and a transmission wheel 143. The first operation member 141 is drivingly connected to the transmission wheel 143, and the transmission wheel 143 is drivingly connected to the positioning pin 142. The first operation member 141 is drivingly connected to the transmission wheel 143 through a first rotating shaft 145. The first operation member 141 and the transmission wheel 143 each rotate about a third axis 104 in the center of the first rotating shaft 145. The first operation member 141 transfers, through the first rotating shaft 145, power required for the rotation of the transmission wheel 143 to the transmission wheel 143. The first operation member 141 moves among a first position, a second position, and a third position under the action of an external force, as shown in FIGS. 6, 7, and 8. It is to be noted that the first position, the second position, or the third position mentioned above is not necessarily limited to the position shown in the figure. The position shown in the figure is a limit position or a critical position for implementing a state of the first locking mechanism 14 in this example. As long as the first locking mechanism 14 can implement the function described by the preceding state, the first locking mechanism 14 may be considered to have arrived at the corresponding position, and the position may be a position between the first position, the second position, and the third position shown in the figure. When the first operation member 141 is at the first position, the first locking mechanism 14 is in the first state, as shown in FIG. 6. The transmission wheel 143 is a special-shaped cam structure and includes a first transmission portion 143a and a second transmission portion 143b that protrude. The first transmission portion 143a and the second transmission portion 143b are at different positions on the transmission wheel 143, that is, the first transmission portion 143a and the second transmission portion 143b protrude in different directions. A first locking portion 115 is disposed on the rear side of the transmission wheel 143, that is, the first locking portion 115 is disposed between the first locking mechanism 14 and the rack 113. The first locking portion 115 is a friction piece with a certain friction coefficient. In this example, a locking plate 114 is disposed between the support base 123 and the rack 113. The locking plate 114 has a scale for assisting in positioning the cutting mechanism. When the first operation member 141 moves to the first position, the first operation member 141 rotates along a first direction 106 to drive the transmission wheel 143 to move along the first direction 106. As the first operation member 141 moves toward a position adjacent to the first position, the second transmission portion 143b gradually presses the first locking portion 115 so that the first locking portion 115 gradually fits snuggly against the locking plate 114, that is to say, the locking plate 114 fits snugly against the internal structure of the rack 113. Thus, the rack 113 and the locking plate 114 are locked to each other. When the cutting mechanism is stationary relative to the support base 123, the first operation member 141 is at the first position, that is, the first locking mechanism 14 is in the first state. In this example, a second locking portion 116 is disposed between the rack 113 and the locking plate 114, and the second locking portion 116 is also a friction piece with a certain friction coefficient. The locking stability of the first locking mechanism 14 in the first state can be further improved by the first locking portion 115 and the second locking portion 116 that are distributed on two sides of the locking plate 114.

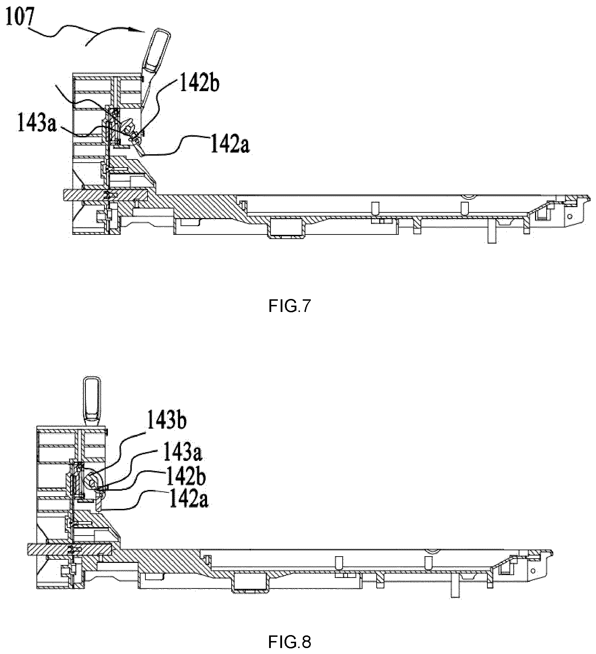

When the first operation member 141 is at the second position, the first locking mechanism 14 is in the second state, as shown in FIG. 7. The positioning pin 142 is disposed at intervals below the transmission wheel 143 and moves between a positioning position and a non-positioning position. The upper end of the positioning pin 142 includes a driven portion 142b configured to correspond to the shape and position of the first transmission portion 143a, and a protruding positioning portion is disposed at the lower end of the positioning pin 142. A second rotating shaft 146 penetrates through the middle of the positioning pin 142, and the positioning pin is rotatable about a fourth axis 105 in the center of the second rotating shaft. The first operation member 141 rotates along a second direction 107 to drive the transmission wheel 143 to rotate along the second direction 107. The first transmission portion 143a interferes with the driven portion 142b. Under the interference from the first transmission portion 143a, the positioning pin 142 rotates along the first direction 106 about the fourth axis 105. When the first operation member 141 moves to the second position, the positioning pin 142 moves from the positioning position to the non-positioning position.

When the first operation member 141 is at the third position, the first locking mechanism 14 is in the third state, as shown in FIG. 8. The third position is between the first position and the second position in the front and rear direction. When the first operation member 141 is at the third position, the first transmission portion 143a does not interfere with the driven portion 142b and the second transmission portion 143b does not press the first locking portion 115 and the locking plate 114 so that the positioning portion 142a is at the positioning position and the cutting mechanism is also rotatable relative to the support base 123, which is the third state. In this example, when the first locking mechanism 14 is in the third state, a certain gap exists between the lower edge of the first transmission portion 143a and the upper edge of the driven portion 142b, or the lower edge of the first transmission portion 143a and the upper edge of the driven portion 142b are just in contact with each other. The case where the lower edge of the first transmission portion 143a and the upper edge of the driven portion 142b are just in contact with each other refers to that the two surfaces are tangential to each other, but the first transmission portion 143a generates no acting force for rotating the positioning pin 142. Similarly, when the first locking mechanism 14 is in the third state, a certain gap exists between a side surface of the second transmission portion 143b and the inner wall of the rack 113, or the side surface of the second transmission portion 143b and the inner wall of the rack 113 are just in contact with each other. The case where the side surface of the second transmission portion 143b and the inner wall of the rack 113 are just in contact with each other refers to that the two surfaces are tangential to each other, but the second transmission portion 143b generates no acting force for pressing the first locking portion 115 behind the rack 113.

Several positioning blocks 124 that mate with the positioning pin 142 are further disposed on the support base 123. In this example, a positioning block protrudes outward relative to the surface of the support base 123. Since the cutting mechanism needs to rotate, the upper surface of the support base 123 is configured to have the shape of a circular arc. The positioning blocks 124 are disposed at different positions of the surface so that when the rack 113 rotates to different positions, the positioning pin 142 may be limited by the positioning blocks 124 at the different positions. In this example, the left sidewall of the positioning block 124 is in contact with the positioning pin 142. An included angle α is formed between the straight line connected from the left sidewall of the positioning pin 142 (or the left sidewall of the positioning block 124) to the center of the support base and the plane in which the workbench is located. The included angle is an angle at which the positioning block 124 is mounted, and α is also an angle at which the rotation of the cutting mechanism is positioned, where the value of α includes, but is not limited to, common cutting angles, such as 30°, 45°, 60°, 90°, 12°, 135°, and 15°. In other examples, the positioning block 124 is configured to be a structure that is detachably or rotatably adjusted, and the positioning angle is adjusted according to the user's requirement.

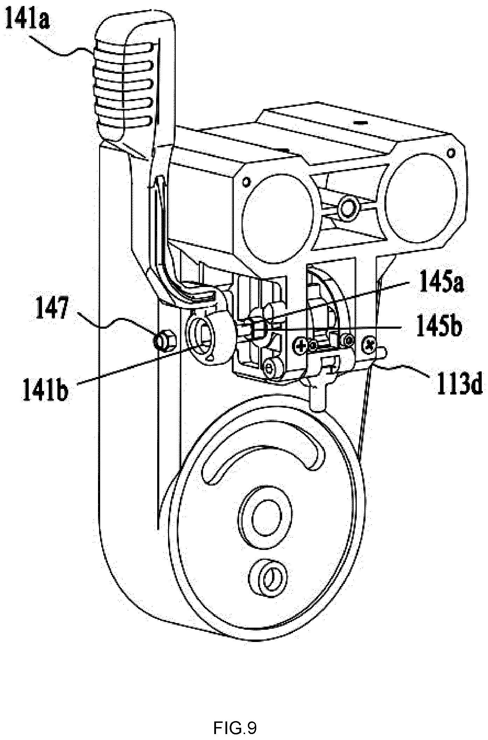

As shown in FIG. 9, two ends of the first rotating shaft 145 are fixed to the bracket 113d. One of the two ends of the first rotating shaft 145 partially extends out of the bracket 113d, and the portion extending outside is fixedly connected to the first operation member 141 to transfer a movement of the first operation member 141. The preceding portion extending outside includes a first fixing portion 145a and a second fixing portion 145b. The first operation member 141 includes an operation portion 141a and a fixing hole 141b. The second fixing portion 145b is correspondingly connected to the fixing hole 141b, and the first fixing portion 145a passes through the fixing hole 141a and is connected to a fixing member 147 so that the first operation member 141 and the first rotating shaft 145 are stably connected to each other. The outer diameter of the fixing member 147 is greater than the diameter of the fixing hole 141b. The cross section of the fixing hole 141b and the cross section of the second fixing portion 145b have a waist shape or a flat shape.

The first locking mechanism 14 further includes biasing elements 144 used for resetting the positioning pin 142 from the non-positioning position to the positioning position. Specifically, a biasing element 144 is a metal spring contact. The biasing element 144 has a first end and a second end, where the first end is fixedly connected to the rack 113 over the transmission wheel 143, and the second end is fixed to the upper end of the positioning pin 142 by a fastener 148. In some examples, the positioning pin 142 includes a rotating portion 142d and third connectors 142c. The rotating portion 142d is sleeved outside the second rotating shaft 146 so that the positioning pin 142 is rotatable relative to the bracket 113d. The third connectors 142c are connected to the rotating portion 142d. The third connectors 142c and the driven portion 142b are disposed at different positions in the axial direction of the rotating portion 142d, which is more conducive to setting the position of the transmission portion of the transmission wheel 143 and the position of the driven portion of the transmission wheel 143. Thus, the compactness of the first locking mechanism is ensured. In some examples, the third connectors 142c and the driven portion 142b also extend along different directions in the radial direction of the rotating portion 142d. In this example, at least two third connectors 142c are disposed, and the preceding third connectors 142c are disposed on two sides of the driven portion 142b in the direction of the third axis 104 separately so that reset stability is ensured. In some examples, the two third connectors 142c are connected to second ends of the two biasing elements 144 separately. In some examples, first ends of the two biasing elements 144 are integrally formed. When the positioning pin 142 rotates upward to the non-positioning position under the action of the transmission wheel 143, the third connectors 142c press or twist the biasing elements 144. After the interference force of the transmission wheel 143 disappears, the positioning pin 142 returns to the positioning position under the action of the biasing elements 144.

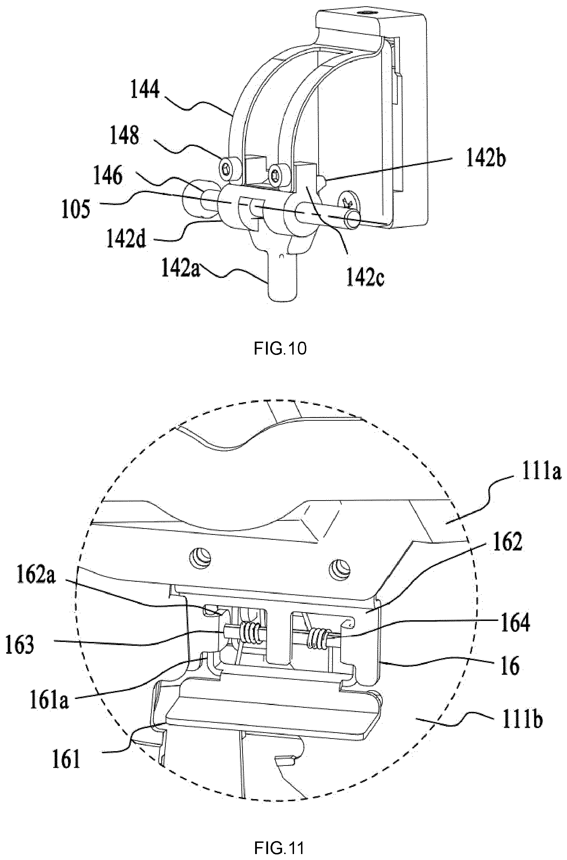

As shown in FIG. 11, the cutting mechanism is further provided with a guide assembly 16 for guiding the workpiece. The guide assembly 16 is disposed on the shield 111a. The guide assembly 16 is spaced from the cutting member 111b. In other examples, the guide assembly 16 may be disposed at a position such as a fence or the workbench. The guide assembly 16 includes a moving guide member 161 and a fixed guide member 162 that are pivotally connected to each other. Specifically, the fixed guide member 162 is fixedly connected to the shield 111a, the fixed guide member 162 includes pivot holes 162a, and the moving guide member 161 includes second pivot portions 161a. The second pivot portions 161a and the pivot holes 162a are pivotally connected to each other by a third rotating shaft 163 so that the moving guide member 161 is rotatable relative to the fixed guide member 162 about the third rotating shaft 163. The moving guide member 161 has a first position and a second position. As shown in FIG. 11, the moving guide member 161 is at the first position. The guide assembly 16 further includes a first elastic member 164. An end of the first elastic member 164 is connected to the moving guide member 164 to provide an acting force for resetting the moving guide member 164. In a natural state of the first elastic member 164, the moving guide member 161 is at the first position. In this example, the first position of the moving guide member 161 is configured to be inclined downward relative to the horizontal plane or parallel to the horizontal plane. The second position of the moving guide member 161 is a position to which the moving guide member 161 presses the first elastic member 164 to rotate upward. A specific height of the second position depends on the height of the workpiece. In a use process of the miter saw 100 in this example, a relatively high workpiece is placed with relatively poor stability during an operation. The guide assembly is disposed so that when the workpiece moves along the cutting member 111b, the upper surface of the workpiece is in contact with the moving guide member 161, the guide assembly rotates upward under the action of a pushing force of an operator, and the first elastic member 164 that is pressed causes the moving guide member 161 to always have a downward pressing force, thereby ensuring the stability of the workpiece.

In some examples, the moving guide member 161 includes a flat and straight surface, an L-shaped step surface, or a stepped surface that is connected to the second pivot portions 161a, which includes, but is not limited to, the preceding structure. The preceding structure causes the moving guide member 161 to have at least one plane or one edge in contact with the workpiece. The fixed guide member 162 is fixed to the first shield. The fixed guide member 162 further has a height adjustment apparatus which can adjust position according to the height of the workpiece.

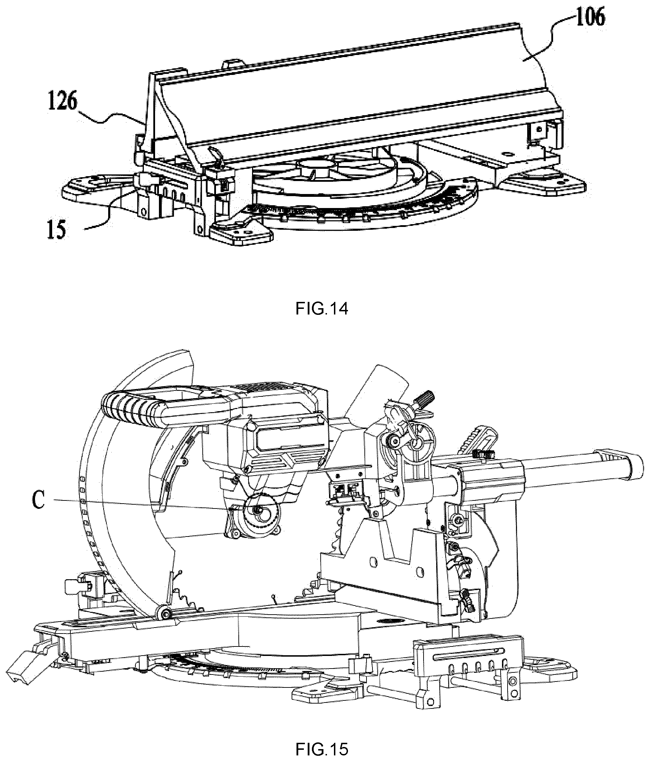

As shown in FIG. 1, an extension mechanism 15 is disposed on the outer side of the workbench 12. Specifically, the extension mechanism 15 is configured to be approximately symmetrical with respect to the cutting plane S. The extension mechanism 15 includes an auxiliary support member 152, a first slide rail 151, and an extension table 155. The auxiliary support member 152 is connected to the first slide rail 151 and moves along the slide rail. A horizontal slide rail 151a and a vertical slide rail 151b are consecutive and are connected to each other such that the first slide rail 151 is formed. Specifically, the horizontal slide rail 151a and the vertical slide rail 151b extend along different directions and are connected to each other at a point to form an L shape. In order that a smooth slide of the auxiliary support member 152 is ensured, the L-shaped connection is in the shape of an arc. The auxiliary support member 152 has at least a first support surface and a second support surface, and a workpiece whose size exceeds the size of the workbench can be supported by the preceding support surfaces. Specifically, when the auxiliary support member 152 moves to the vertical slide rail 151b, the first support surface of the auxiliary support member 152 is flush with the surface of the horizontal slide rail 151a, and the auxiliary support member 152 supports an extension surface of a slide rail surface. When the auxiliary support member 152 moves onto the horizontal slide rail 151a, the first support surface of the auxiliary support member 152 mates with the fence to support the workpiece in an inclined posture or the like, as shown in FIG. 14. In some examples, the auxiliary support member 152 further includes a second support surface that is different from the first support surface. The second support surface is used for limiting a to-be-cut workpiece and may cut the workpiece to a fixed length (approximately one half of the diameter of the workbench). When the auxiliary support member 152 is located on the left side of the workbench 12, the second support surface is the right end surface of the auxiliary support member 152, and the workpiece enters the workbench 12 from the right side. When an end of the workpiece reaches the second support surface of the auxiliary support member 152, the cutting mechanism is operated to complete the cut, and the workpiece may be cut to a given length. Based on this, the auxiliary support member 152 may be detached from the first slide rail 151. In a third state of the extension assembly, the auxiliary support member 152 is mounted on the front side of the fence 126 and completes the preceding limiting and positioning functions on the front side of the fence 126 so that a set cutting length of the workpiece is further reduced. In other examples, the auxiliary support member 152 may rotate about its own axis, and the second support surface of the auxiliary support member 152 is rotated to a side against the workpiece. The curvature, slope, or surface shape of the second support surface is different from those of the first support surface so that the support member supports the workpiece in different manners.

The auxiliary support member 152 includes a first support portion 154a, a first handle 154b, and a slide rod 157 that is connected to the first slide rail 151. The slide rod 157 includes a slide end 157b and a fixed end 157a, where the diameter of the slide end 157b is greater than the diameter of the fixed end 157a, the slide end 157b is embedded into the first slide rail 151, and the fixed end 157a is connected to the support base 154a. The body of the slide rod 157 is cylindrical so that it is ensured that the auxiliary support member 152 rotates about its own axis on the first slide rail 151. The first support portion 154a forms the body of the auxiliary support member 152 and has the first support surface and the second support surface. The first support portion 154a is fixedly connected to the fixed end 157a, and the first handle 154b is disposed on the side of the first support portion 154a opposite to the preceding connection and used for manipulating the movement of the auxiliary support member 152.

The combined structure of the auxiliary support member 152 and the first slide rail 151 is placed on the extension table 155. The extension table 155 is connected to the base 13 by a telescopic device 156 so that the extension table 155 can adjust the overall width to **suit** the requirement of the workpiece. The extension table 155 further includes a second slide rail 158. A second handle 153 is disposed in the second slide rail 158, where one end of the second handle 153 passes through the second slide rail 158 to be connected to the first slide rail 151. The second handle 153 is manipulated so that the whole first slide rail 151 can slide on a plane of the extension table 155. Thus, the supported range can be extended.

In a miter saw in the related art, a transmission device is connected to a cutting member.

The cutting member is transmitted with an electric motor through the transmission device. Part of the transmission device and the cutting member are disposed concentrically. The transmission device includes an unlocking device used for removing the connection of the cutting member and the cutting mechanism to the transmission device, and then the user replaces the cutting member. In the related art, buttons of the unlocking device typically include an unlocking button 17 and an elastic body 171 that are disposed on a transmission device housing 172. Generally, the elastic body 171 provides only a restoration force for the unlocking button 17, that is, when the operator presses the unlocking button 17, the unlocking device inside is in an unlocked state. In order that the mechanism is configured simply and easily and the arrangement of the transmission device is not affected, no engagement structure for the press is generally disposed inside, and the user needs to keep pressing the unlocking button 17 for a long time to cooperate in the unlocking.

To solve the preceding problem, in this example, a special-shape slot 175 is formed on a button housing 173, an unlocking pin 174 is disposed in the button housing 173, and a protruding engagement portion 174a is disposed on the unlocking pin 174. The special-shaped slot includes at least two slots in different directions. The engagement portion 174a is movable along the special-shaped slot 175. When the engagement portion 174a moves along a first slot from the end of the special-shaped slot 175 to the intersection between the first slot and a second slot, the unlocking device changes from a locked state to the unlocked state. After entering the second slot, the engagement portion 174a mates with the second slot so that the unlocking device maintains the unlocked state, and in this case, the operator can disassemble and assemble the cutting member with both hands.

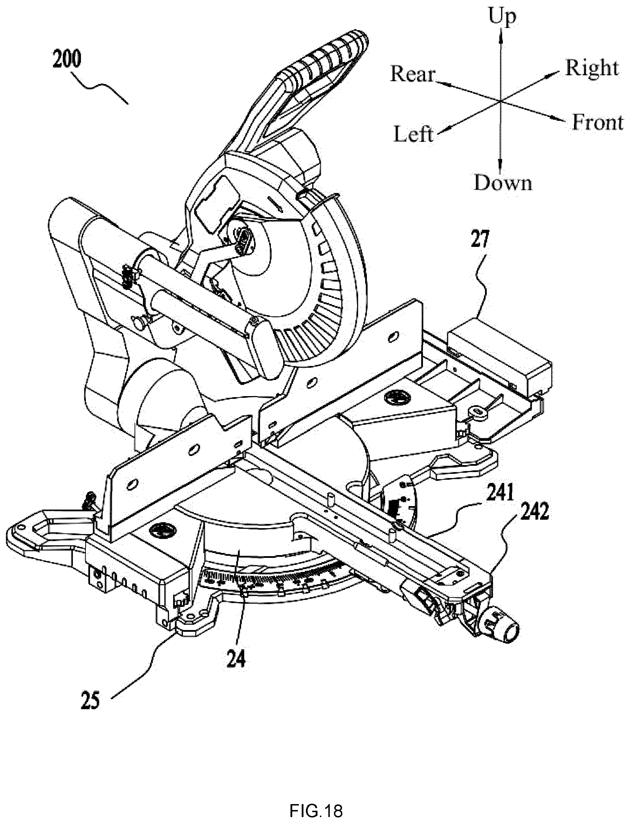

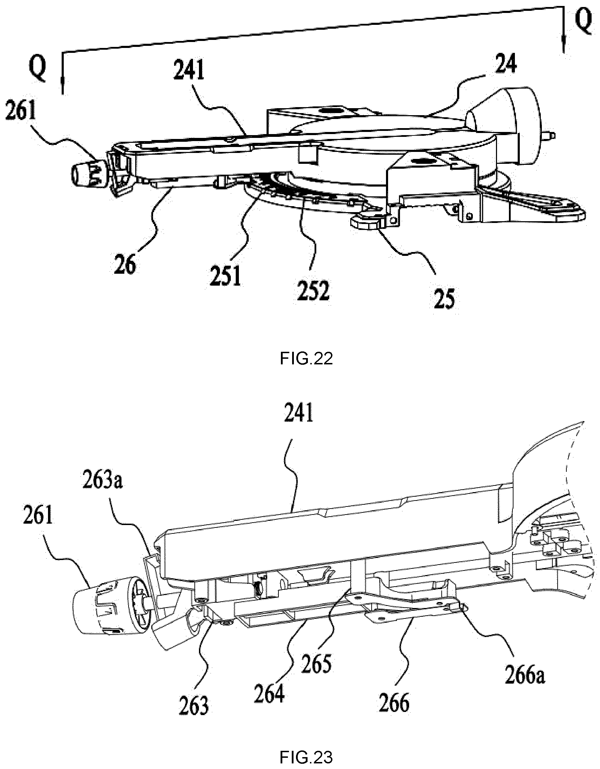

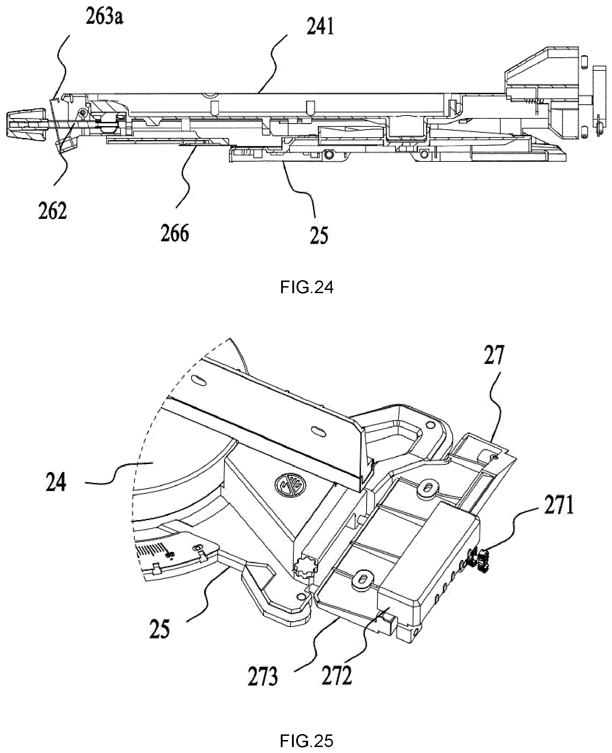

As shown in FIGS. 18 to 24, a miter saw is disclosed in this example. Components of this example the same as or corresponding to those of example one use the corresponding reference numerals or names in example one. For simplicity, only differences between example two and example one are described. A miter saw 200 in this example differs from that in example one in the structure, position, and the like of a first locking mechanism 21.

The body of the first locking mechanism 21 is disposed along a first channel 241, and a third operation member 221 and a fourth operation member 231 of the first locking mechanism 21 are exposed at a second end 242 of the first channel 241. The first locking mechanism 21 is constituted by a locking assembly 22 and a stop assembly 23, and the locking assembly 22 and the stop assembly 23 are connected to the third operation member 221 and the fourth operation member 231, respectively.

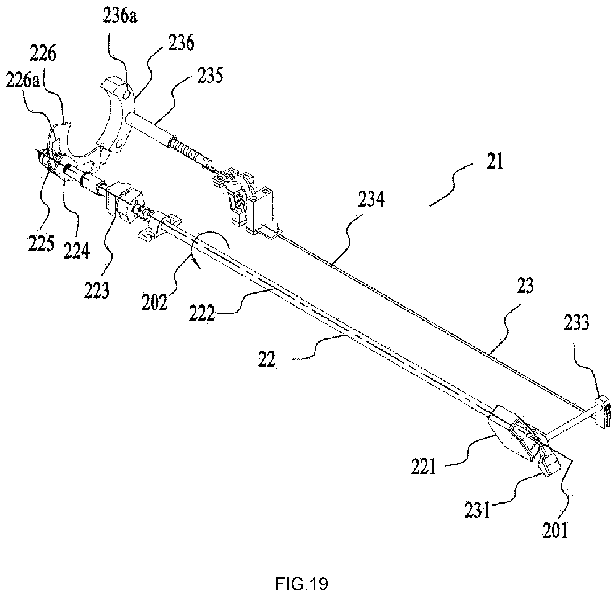

As shown in FIG. 19, the locking assembly 22 includes a transmission rod 222 connected to the third operation member 221. The user manipulates the third operation member 221 to rotate to drive the transmission rod 222 to rotate about a first straight line 201. A first end of the transmission rod 222 is connected to the third operation member 221, and a second end of the transmission rod 222 is disposed in a support base and connected to a locking member. The locking member includes a first fixing member 224, a lock piece 226, a first elastic member 225, and a second fixing member 227. A drive section is disposed at the second end of the transmission rod 222, that is, the end of the transmission rod 222 facing away from the third operation member 221. In this example, the drive section is a threaded section, and the end penetrates through and is connected to the first fixing member 224, the locking piece 226, the first elastic member 225, and the second fixing member 227 successively through the threaded section. Specifically, the first fixing member 224 and the locking piece 226 are connected to the housing of the support base. The locking piece 226 is further connected to a rack. The locking piece 226 is provided with a slide slot 226a so that the transmission rod 222 may slide in the slide slot 226a when a cutting mechanism rotates. The second fixing member 227 is connected to the very end of the second end of the transmission rod 222, the first elastic member 225 is disposed between the second fixing member 225 and the locking piece 226, and part of the housing of the support base is disposed between the first fixing member 224 and the locking piece 226. When the transmission rod 222 rotates along a first direction 202 about the first straight line 201, under the action of the threaded section, the transmission rod 222 moves toward the front of the miter saw 200 along the first straight line 201, the second fixing member 227 presses the first elastic member 225, the first elastic member 225 continues to press the locking piece 226, and the locking piece 226 presses the housing of the support base to the first fixing member 224 so that the object to press the rack and the support base is achieved. Thus, the rack and the support base cannot move relative to each other so that the first locking mechanism locks the rotation of the rack and the cutting mechanism enters a first state. When the transmission rod 222 rotates along the direction opposite to the first direction 202 about the first straight line 201, the transmission rod 222 moves toward the rear of the miter saw 200 along the first straight line 201. Under the action of a restoration force of the first elastic member 225, the transmission rod 222 drives the second fixing member 227 more quickly to move away from the locking piece 226 to complete unlocking the rotation of the cutting mechanism. In this case, the cutting mechanism may enter a second state or a third state.

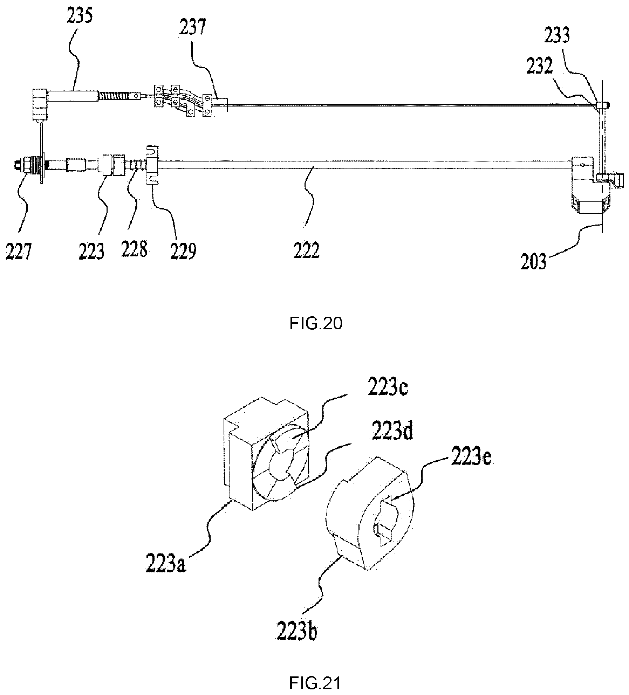

The locking assembly 22 further includes a clutch structure 223 disposed on a positioning rod 222. The clutch structure is used for restraining the movement of the transmission rod 222 toward the rear of the miter saw 200 along the direction of the first straight line 201, that is, the further movement during an unlocking process. As shown in FIG. 21, the clutch structure 223 includes a first clutch member 223a and a second clutch member 223b, where the first clutch member 223a and the second clutch member 223b each have a surface that meshes with each other. Specifically, the first clutch member 223a is fixed to the housing below a workbench 24, the second clutch member 223b is fixedly connected to the transmission rod 222, and the first clutch member 223a and the second clutch member 223b each have a through hole for the transmission rod 222 to penetrate through. In some examples, a stepped step 223c is disposed on the surface of the first clutch member 223a facing the second clutch member 223b, the step 223c becomes higher and higher gradually along the first direction 202, and a cross section 223d is formed after the step 223c reaches a certain height. The surface of the second clutch member 223b facing the first clutch member 233a also has a shape meshing with the first clutch member 233a. Each of the preceding two surfaces has a structure with at least two steps 223c. A special-shaped hole 223e is disposed in the center of the second clutch member 223b. The special-shaped hole 223e is a through hole different from a circular hole. Correspondingly, a protruding block is disposed on the transmission rod 222 and can be engaged with the special-shaped hole 223e. Thus, a fixed connection between the second clutch member 223b and the transmission rod 222 is completed. Specifically, after the first clutch member 223a and the second clutch member 223b mesh with each other, the rotation of the transmission rod 222 along the direction opposite to the first direction 202 is restrained by the clutch structure due to the restraint of the two cross sections 223d.

The locking assembly 22 further includes a connector 229 disposed in front of the second clutch member 223b, and a second elastic member 228 is disposed between the connector 229 and the second clutch member 223b. Two ends of the second elastic member 228 are connected to the connector 229 and the second clutch member 223b separately. The connector 229 is sleeved on the transmission rod 222 and movably connected to the transmission rod 222, and the transmission rod 222 is movable in the connector 229. The connector 229 is also fixedly connected to the housing of the workbench 24. When the transmission rod 222 rotates along the first direction 202 about the first straight line 201, the transmission rod 222 moves toward the front of the miter saw 200 along the first straight line 201, and the locking assembly completes locking while the second clutch member 223b is driven by the transmission rod 222 to move along the step 223c until the second clutch member 223b is driven by the second elastic member 228 to be separated from the first clutch member 223a. When the transmission rod 222 rotates along the direction opposite to the first direction 202 about the first straight line 201, the transmission rod 222 moves toward the rear of the miter saw 200 along the first straight line 201, and the second clutch member 223b is driven by the transmission rod 22 such that the second clutch member 223b and the first clutch member 223a approach each other. When the second clutch member 223b and the first clutch member 223a approach each other so that the two surfaces mesh with each other and the second elastic member 228 is pressed, the cross sections 223d of the two surfaces are engaged with each other. Thus, the second clutch member 223b cannot move further, thereby restraining the further movement of the transmission rod 222. In this case, a critical state after the unlocking is entered, and it is ensured that the cutting mechanism may stop moving after the unlocking. A damping member is further disposed on the rear side of the support base and is used for providing a buffer for the rotating rack.

The stop assembly 23 includes a transmission member 234 connected to the fourth operation member 231. In this example, the transmission member 234 is a flexible transmission structure. In other examples, the transmission member 234 may be a rigid structure. The transmission member 234 is connected to the fourth operation member 231 by a connecting rod 232 and a conversion portion. In this example, the conversion portion is a cam 233. The connection rod 232 and the cam 233 are used for changing a transmission manner and a transmission direction of the fourth operation member 231 so that the fourth operation member 231 and the third operation member 221 may be disposed on the same side of the first channel 241. In another alternative example, the conversion portion may be a connecting rod transmission structure.

Since a first accommodation space is disposed in the middle of the first channel 241, the housing of the first channel 241 is divided into the left portion and the right portion. The body of the stop assembly 23 and the body of the locking assembly 22 may be disposed in the two portions separately. The fourth operation member 231 and the third operation member 221 are disposed on a side of the first channel 241, and the connecting rod 232 is transversely disposed at an end of the first channel 241. The body of the transmission member 234 extends along the first channel 241, that is, the body of the transmission member 234 extends along a direction parallel to the first straight line 201. Specifically, one end of the connecting rod 232 is connected to the fourth operation member 231, and the other end of the connecting rod 232 is connected to the cam 233. The cam 233 is driven by the fourth operation member 231 to be capable of rotating about the central axis of the connecting rod 232, that is, a second straight line 203. The direction in which the transmission member 234 moves is parallel to the plane in which the cam 233 rotates. In this example, the direction in which the transmission member 234 moves is parallel to but opposite to the first straight line 201. An end of the transmission member 234 is connected to a positioning pin 235. At least part of the positioning pin 235 is connected to the housing of the support base so that the positioning pin 235 can move along only a direction parallel to the first straight line 201. A positioning block 236 is disposed at the positioning pin 235. The positioning block 236 is disposed in the rack and provided with several positioning holes 236a. The position of each of the positioning holes 236a corresponds to a different angle to which the rack rotates. When the first locking mechanism 21 is in the second state, the cutting mechanism is rotatable relative to the support base. In this case, when the cam 233 moves toward the front side, the transmission member 234 is driven to move toward the front side, thereby driving the positioning pin 235 to move forward, and the positioning pin 235 is separated from a positioning hole 236a. When the locking assembly unlocks the rotation of the cutting mechanism, the cutting mechanism is rotatable relative to the support base. When the first locking mechanism 21 is in the third state, the cutting mechanism is temporarily stationary relative to the support base. Regardless of whether the locking assembly locks the rotation of the cutting mechanism about a first axis or not, the cutting mechanism keeps stationary. In this case, when the cam 233 moves toward the rear side, the transmission member 234 is driven to move toward the front side, thereby driving the positioning pin 235 to move forward, and the positioning pin 235 enters a positioning hole 236a of the positioning block 236. Since at least part of the positioning pin 235 is connected to the support base, the cutting mechanism may be limited to a preset position by the positioning pin. In this case, it is only necessary to manipulate the third operation member 221 to lock the cutting mechanism, thereby implementing the locking of the cutting mechanism.

In this example, the shape of the positioning hole 236a is consistent with the shape of an end of the positioning pin 235 so that when the first locking mechanism is in the third state, the positioned cutting mechanism is basically similar to the cutting mechanism in the first state. In other examples, the positioning hole 236a may be a long special-shaped hole such as an arc-shaped hole. Two ends of the hole correspond to specific cutting angles separately so that the positioning pin 235 is rotatable within a certain set range, that is, the cutting mechanism is rotatable within a certain set range. When the positioning pin 235 rotates to the two ends, the positioning pin 235 corresponds to two set angles separately. The operator can quickly determine the required angle range in conjunction with an operation member disposed on the front side of the miter saw 200, instead of going to the rear of the miter saw 200 to confirm a scale.

In addition to the cutting mechanism rotatable relative to the support base, the workbench 24 of the miter saw 200 is rotatable relative to a base 25. This structure is not limited to this example. To facilitate the operation of the rotation of the workbench 24, a positioning mechanism 26 is further included in this example. The positioning mechanism 26 is disposed under the workbench 24 for the operator to rotate the workbench 24, adjust the position of the workbench 24 on the base 25, position the workbench 24 on the base 25, and the like. The positioning mechanism 26 includes a locked position and an unlocked position that correspond to the locking and unlocking of the rotation of the workbench 24 relative to the base 25, respectively. The positioning mechanism 26 includes a fifth operation member 261 connected to a second end of the first channel 241. The user may drive, by using the fifth operation member 261, the workbench 24 to move and may drive, by using the fifth operation member 261, the positioning mechanism 26 to move between the locked position and the unlock position.

Specifically, the fifth operation member 261 is connected to the housing of the workbench 24 housing by a pivot rod 262 so that the pivot rod 262 is rotatable about a point. The pivot rod 262 is connected to a first movement member 263. The first movement member 263 is driven by the pivot rod 262 to be capable of moving in the same direction. A first end of the first movement member 263 is disposed at the fifth operation member 261, and a second end of the first movement member 263 abuts against a second movement member 264. When the first movement member 263 rotates, the second movement member 264 can move in the direction opposite to the first movement member 263 under the action of the first movement member 263, that is, when the second end of the first movement member 263 rotates downward relative to an original position, the end of the second movement member 264 facing away from the first movement member 263 rotates upward. Specifically, a first end of the second movement member 264 abuts against the lower part of the first movement member 263, and a second end of the second movement member 264 is connected to a first adjustment member 266. The first adjustment member 266 is an elastic structure disposed under the second movement member 264, and the first adjustment member 266 is at least partially connected to the lower side of the second movement member 264. A first end of the first adjustment member 266 is connected to the housing of the workbench 24 by a fixing member 265 so that the first adjustment member 266 may use the connection of the fixing member 265 as a reference point of elastic deformation. A second end of the first adjustment member 266 is disposed above a second adjustment member 252 of the base 25, and the second adjustment member 252 is provided with a scale required for adjusting the rotation of the workbench in the horizontal direction. In some examples, a positioning portion 266a is disposed at the second end of the first adjustment member 266, and several positioning slots 251 are disposed on the second adjustment member 252 and correspond to different rotation angles of the workbench 24. Specifically, the positioning portion 266a protrudes downward in a shape consistent with the shape of each of the positioning slots 251. The first movement member 263 further includes a third elastic member 263a sleeved on the pivot rod 262. The upper end of the third elastic member 263a is near the second end 242 of the first channel 241. When the positioning mechanism 26 is at the locked position, a certain spacing exists between the upper end of the third elastic member 263a and the second end 242 of the first channel 241. When the fifth operation member 261 moves upward, the upper end of the third elastic member 263a gradually approaches the second end 242 of the first channel 241. When the positioning mechanism 26 is at the locked position, the upper end of the third elastic member 263a and the second end 242 of the first channel 241 are in contact with and press each other so that the third elastic member 263a is subjected to certain deformation. When the workbench 24 needs to be unlocked and the user operates the fifth operation member 261 to move upward, the second end of the first movement member 263 moves downward, and the second end of the second movement member 264 correspondingly moves upward. Thus, the second end of the first adjustment member 266 is driven to move upward and deform, the positioning portion 266a leaves a positioning slot 252, and the positioning mechanism 26 leaves the base 25. In this case, an unlocked state is entered, and the workbench 24 is rotatable relative to the base 25. Otherwise, a locked state is entered. In another example, only one movement member may be provided to complete the preceding transmission. In another example, the positioning portion may be disposed on an adjustment portion, and a positioning slot is disposed at an end of the first adjustment member.

In this example, an auxiliary table assembly 27 is further disposed on a side of the miter saw 200. The auxiliary table assembly 27 is similar to the extension assembly in example one and may perform a support function for assisting and extending the workbench. The auxiliary table assembly 27 in this example further serves to store the workpiece and waste. The auxiliary table assembly 27 includes a support member 272, a seventh operation member 271, an extension base 273, and a telescopic device. The telescopic device is disposed under the support member 272 and connected to the base 25 so that the auxiliary table assembly 27 can move away from or approach the workbench 24. The extension base 273 is disposed on a guide rail of the telescopic device. When the auxiliary table assembly 27 is at an original position, one end of the extension base 273 abuts against the base 25, and the other end of the extension base 273 is connected to the lower part of the support member 272. The upper surface of the support member 272 and the upper surface of the workbench are in the same plane. Thus, the workbench 24, the extension base 273, and the support member 272 form a hollow structure, that is, a spacing exists between the workbench 24 and the extension base 273. The workpiece may be placed in the spacing, and the upper surface of the support member 272 may also be used as a surface for placing the part of the workpiece beyond the workbench. The seventh operation member 271 can lock the moved auxiliary table assembly 27 to a certain position on the guide rail of the telescopic device.

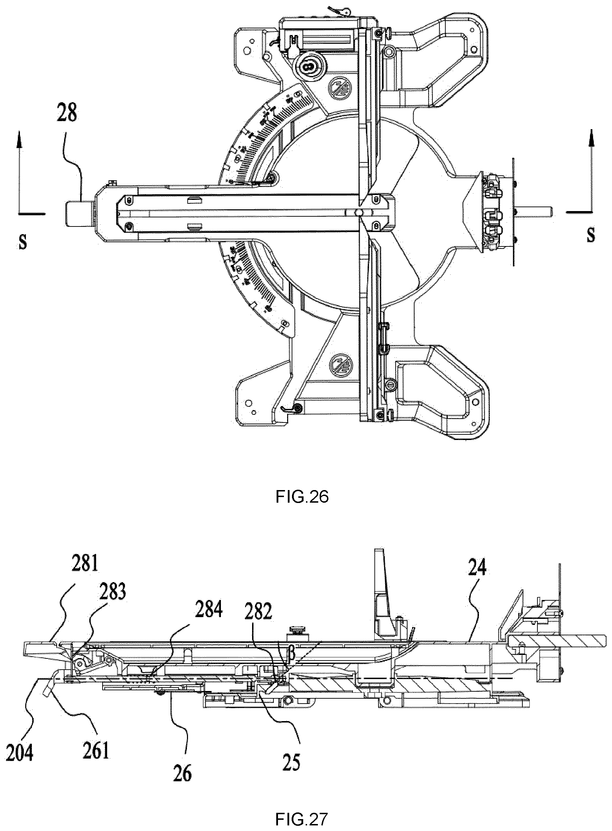

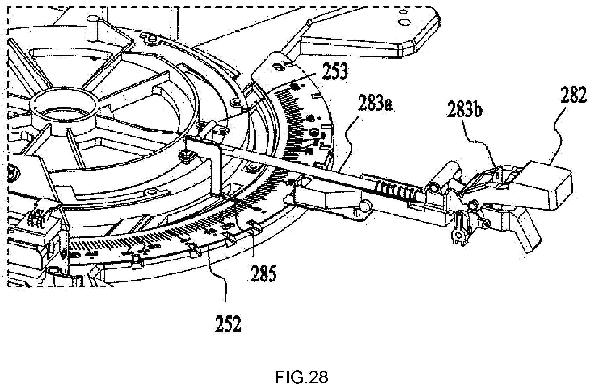

As shown in FIGS. 26 to 28, the miter saw 200 includes a second locking mechanism 28, where at least part of structures of the second locking mechanism 28 are fixedly connected to the workbench 24, and at least part of the structures of the second locking mechanism 28 are disposed under the workbench 24. In particular, part of the structures of the second locking mechanism 28 are disposed along the first channel 241. The second locking mechanism 28 is used for locking the rotated workbench 24. The second locking mechanism 28 and the positioning mechanism 26 complete positioning a rotation angle of the workbench together. The second locking mechanism 28 includes a sixth operation member 281 for the user to operate. When the user operates the sixth operation member 281 to move to a first position of the sixth operation member 281, the second locking mechanism 28 completes locking the workbench 24. When the user operates the sixth operation member 281 to move to a second position of the sixth operation member 281, the second locking mechanism 28 completes unlocking the workbench 24. The locking mentioned above refers to that the workbench 24 is fixed to the base 25 by the second locking mechanism 28. In this case, the workbench 24 and the base 25 cannot complete moving relative to each other. The unlocking mentioned above refers to that there is no fixed connection between the workbench 24 and the base 25 and the workbench 24 can move relative to the base 25 under the action of the user. It is to be understood that a restraint force provided by the positioning mechanism 26 is not sufficient to ensure that the workbench 24 and the base 25 do not move relative to each other during a cutting operation. That is to say, when the positioning mechanism 26 is at the locked position, the relative movement between the workbench 24 and the base 25 may be restrained. However, when the cutting operation is performed, the locked state of the positioning mechanism 26 is easily broken. However, the second locking mechanism 28 may provide a locking force sufficient to cause the workbench 24 and the base 25 to stably keep locked to each other during the cutting operation.

The second locking mechanism 28 includes a brake block 282. The sixth operation member 281 and the brake block 282 are drivingly connected to each other, and the brake block 282 moves with the movement of the sixth operation member 281. When the workbench 24 and the base 25 are locked to each other, a surface of the brake block 282 is in close contact with a surface of the base 25, and the workbench 24 and the base 25 are locked to each other by the brake block 282 under the action of a friction force. Specifically, the base 25 forms an accommodation groove 253 below the workbench 24, where the accommodation groove 253 has a surface in contact with the brake block 282, denoted as a first brake surface, and a corresponding contact surface of the brake block 282 is denoted as a second brake surface. The accommodation groove 253 is disposed on the inner side of the circumference of the second adjustment member 252, and the surface in contact with the brake block 282 is located on the side of the accommodation groove 253 facing away from the second adjustment member 252. An included angle β exists between the first brake surface or the second brake surface and the plane in which the workbench 24 is located, where 5° ≤ β ≤ 90°. In some examples, 15° ≤ β ≤ 70°.

The brake block 282 is connected to the sixth operation member 281 by a transmission assembly 283, and the transmission assembly 283 includes a second transmission member 283b and a first transmission member 283a. One end of the second transmission member 283b is connected to the sixth operation member 281, and the other end of the second transmission member 283b is connected to the first transmission member 283a. The first transmission member 283a extends along a third straight line 204 and is movable in the extension direction of the third straight line 204. In this example, the first transmission member 283a may be a rigid rod-like structure or may be another structure or component. The first transmission member 283a is disposed between the workbench 24 and the base 25, where one end of the first transmission member 283a is connected to the second transmission member 283b, and the other end of the first transmission member 283a is connected to the brake block 282. When the first transmission member 283a moves in the direction of the third straight line 204, the brake block 282 follows the first transmission member 283a to move in a direction parallel to or coinciding with the third straight line 204. In particular, the workbench 24 and the upper surface of the base 25 are parallel to or approximately parallel to the third straight line 204 so that the body of the workbench 24, the first transmission member 283a, and the upper surface of the base 25 are parallel to each other, or the included angle between the body of the workbench 24, the first transmission member 283a, and the upper surface of the base 25 is not greater than 10°. When the sixth operation member 281 moves between the first position and the second position and a movement path of the sixth operation member 281 is not parallel to or does not coincide with the third straight line 204, the second transmission member 283b is used for converting the direction of an acting force of the sixth operation member 281 on the second transmission member 283b into the direction along the third straight line 204. If the sixth operation member 281 moves between the first position and the second position and a movement path of the sixth operation member 281 is parallel to or coincides with the third straight line 204, the transmission assembly 283 may not include the second transmission member 283b.

The first transmission member 283a is connected to fixing structures at the bottom of the workbench 24. The fixing structures restrain the movement of the first transmission member 283a in a radial direction so that the first transmission member 283a basically moves in an axial direction, that is, the direction of the third straight line 204. A biasing element 284 is further disposed between the fixing structures. The biasing element 284 is used for providing a reset force for the movement of the first transmission member 283a.

The second locking mechanism 28 includes a pointer 285. The pointer 285 follows the workbench 24 to move on the scale of the second adjustment member 252. Specifically, the pointer 285 is disposed at the end of the first transmission member 283a facing the brake block, and the pointer 285 moves with the second locking mechanism 28, that is, the pointer 285 rotates with the workbench 24. The end of the pointer 285 is disposed near the second adjustment member 252 and indicates the scale of the second adjustment member 252. Since the second locking mechanism 28 is mounted in the housing of the workbench 24, the pointer 285 is exposed in the workbench 24.

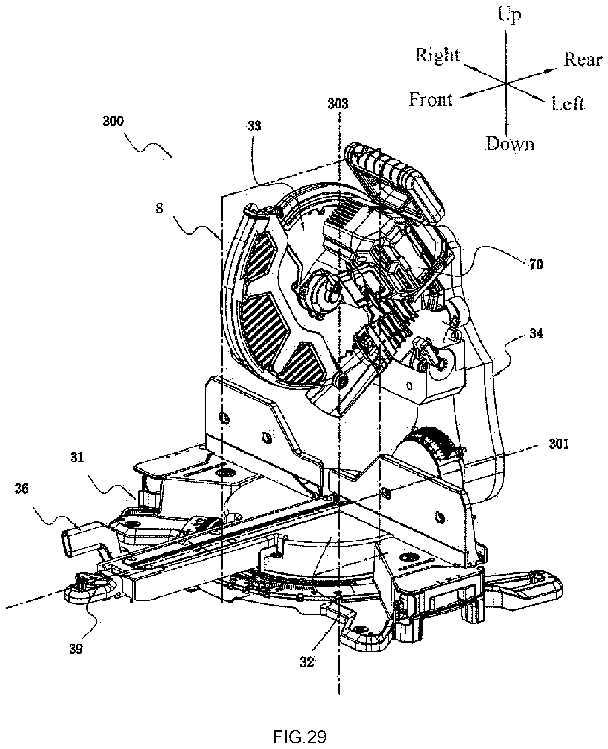

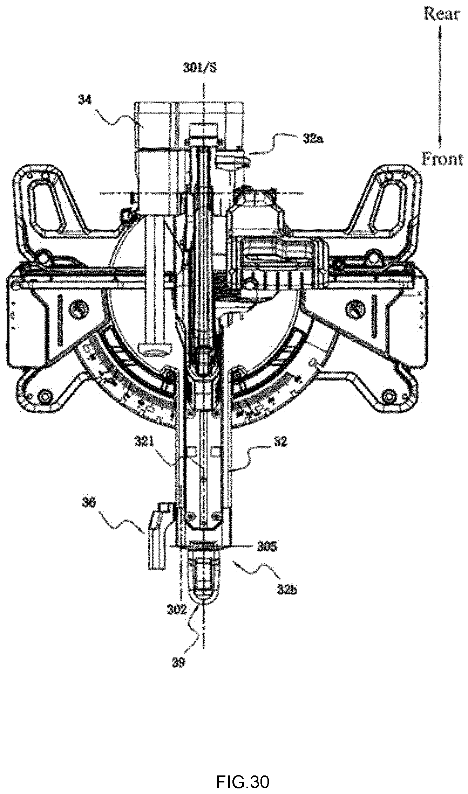

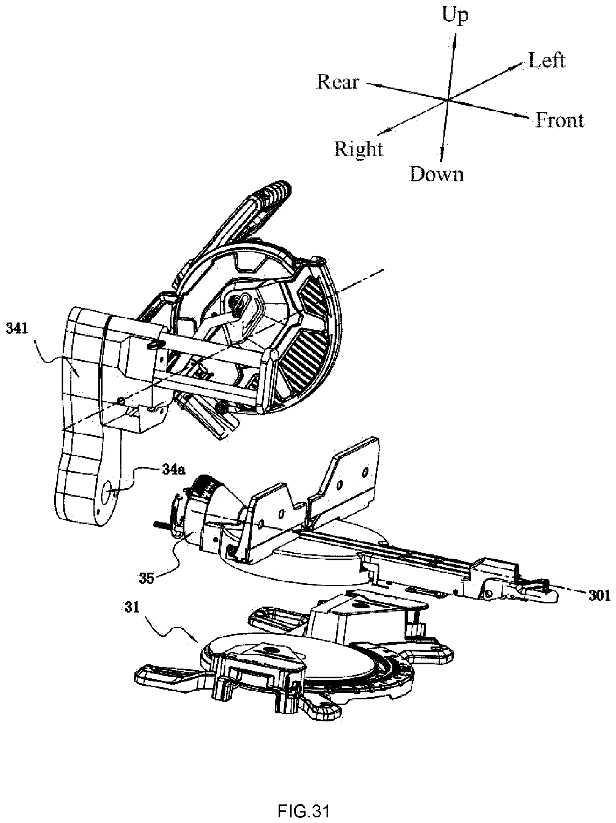

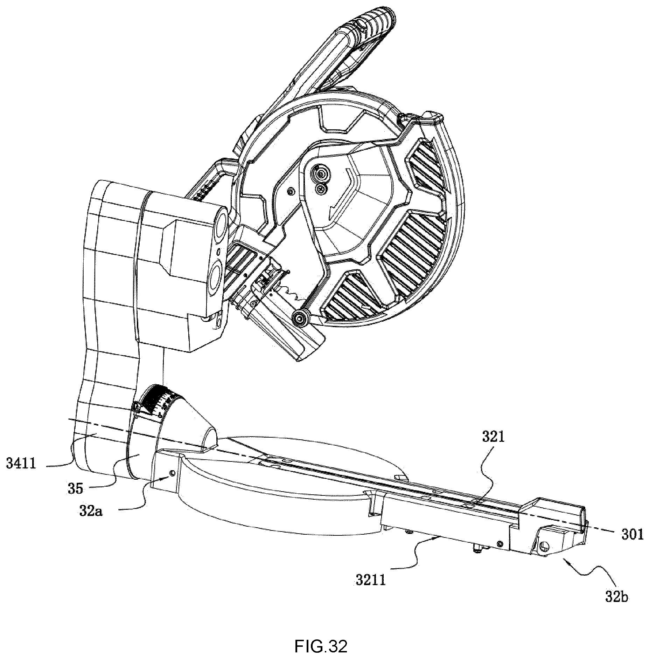

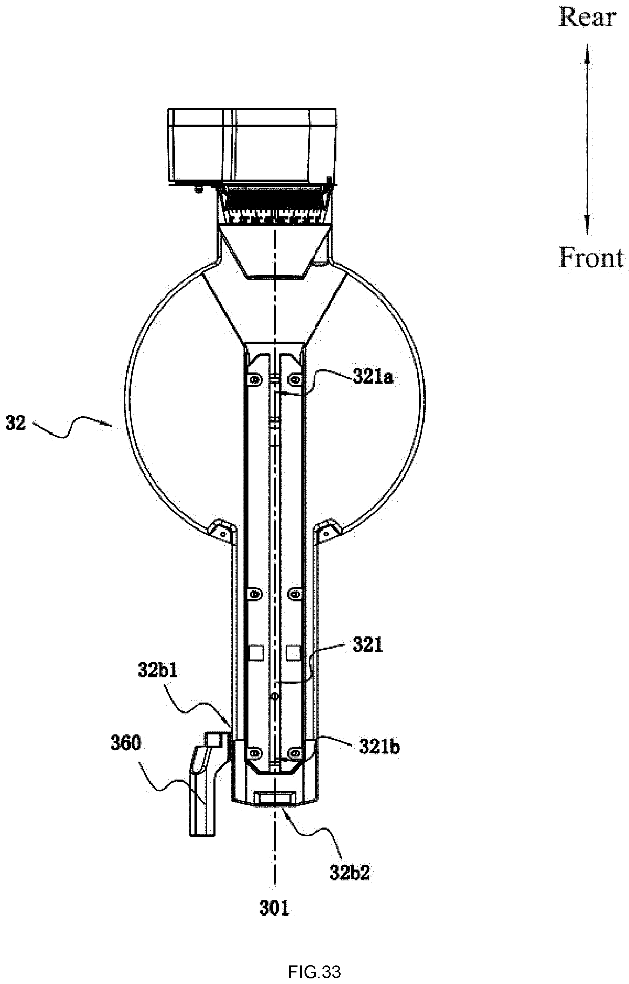

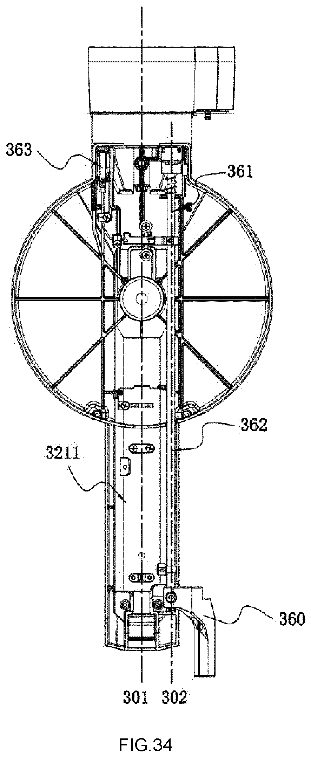

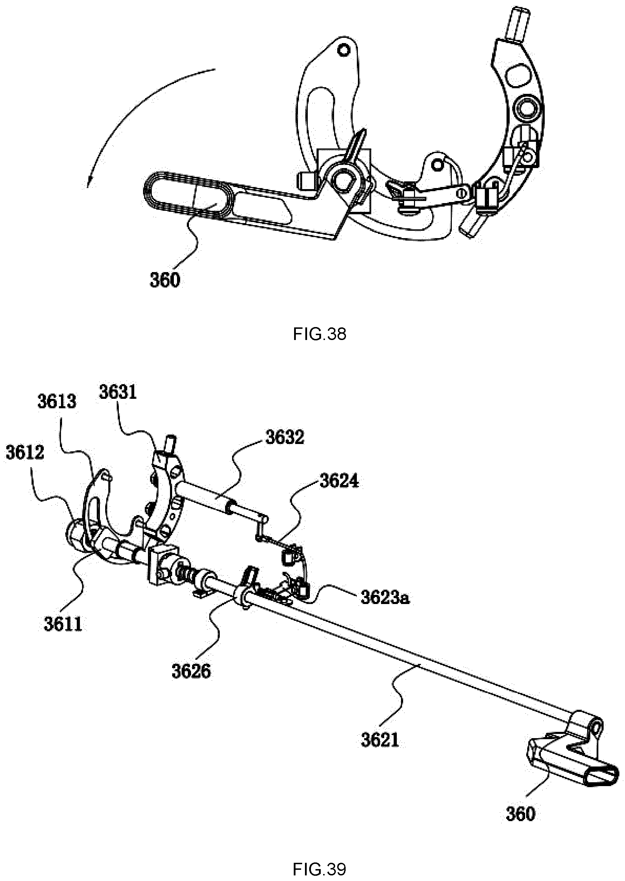

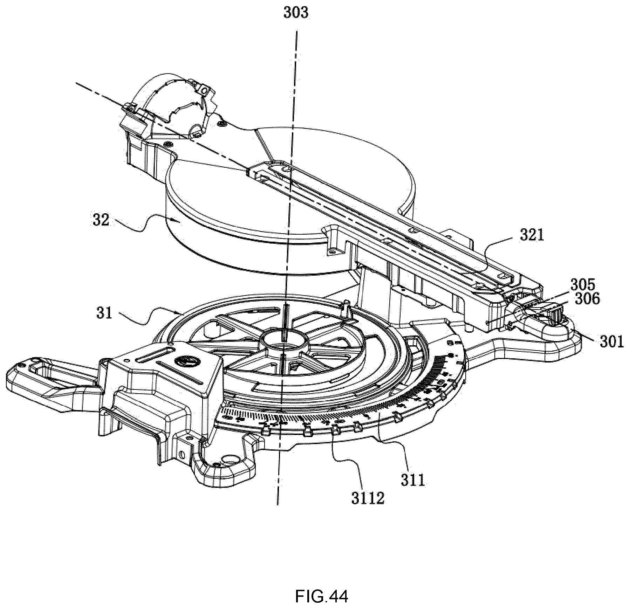

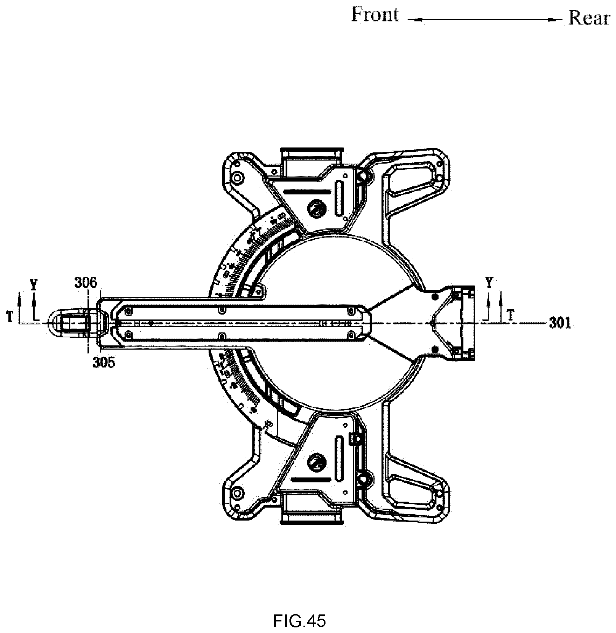

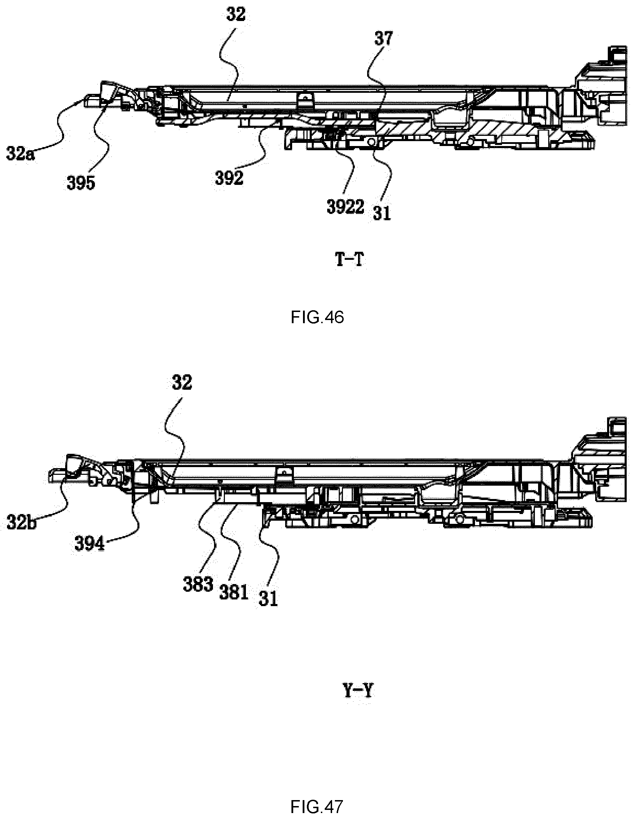

As shown in FIGS. 29 to 51, a miter saw is disclosed in this example. Components of this example the same as or corresponding to those of example two use the corresponding reference numerals or names in example two. For simplicity, only differences between example three and example two are described. A miter saw 300 in this example differs from that in example two in structures controlling the rotation of a cutting mechanism relative to a workbench, structures controlling the rotation of the workbench relative to a base, and the like.

In this example, the miter saw 300 includes a base 31, a workbench 32, a cutting mechanism 33, a support mechanism 34, and a power supply mechanism 70.

The support mechanism 34 includes a rack 341 and a guide rail assembly. The power supply mechanism 70 is configured to provide electrical energy for the miter saw 300. In this example, the power supply mechanism 70 is a battery pack. It is to be understood that a position where the power supply mechanism 70 is mounted does not affect the scope of solutions of the present invention. In another alternative example, when no other creative work is done, all technical solutions obtained through equivalent substitutions or equivalent transformations fall within the scope of the present invention. The battery pack cooperates with a corresponding power supply circuit to supply power to corresponding components in the miter saw 300. It is to be understood by those skilled in the art that the power supply mechanism 70 is not limited to the scenario where the battery pack is used, and the corresponding components in the miter saw 300 may be powered through mains electricity or an alternating current power supply which cooperates with a corresponding rectifier circuit, filter circuit, and voltage regulation circuit.

A first channel 321 that penetrates through the workbench 32 along an up and down direction is further formed on the workbench 32 and extends along a front and rear direction. A first end 321a of the first channel is located in the workbench 32, and a second end 321b of the first channel extends to the outside of the workbench 32. The outside refers to the front end of the cutting mechanism 33.

An end of the workbench 32 behind the first end 321a of the first channel is a first end 32a of the workbench. A support base 35 is disposed at the first end 32a of the workbench, that is, the support base 35 is disposed at the rear end of the cutting mechanism 33. Specifically, the support base 35 is pivotally connected to the rack 341, and the rack 341 can support the cutting mechanism 33 and drive the cutting mechanism 33 to rotate relative to the workbench 32 about a first axis 301. When the cutting mechanism 33 rotates relative to the workbench 32 about the first axis 301, an inclined cut of a workpiece in a vertical direction may be implemented. That is to say, when the cutting mechanism 33 rotates relative to the workbench 32 about the first axis 301, a cutting plane S formed by the cutting member 131 is inclined to a plane formed in the up and down direction.

In some examples, the first axis 301 is in the cutting plane S, and the cutting plane S is also rotated about the first axis 301. The structure of each of the workbench 32, the first channel 321, and the support base 35 is basically symmetrical with respect to the first axis 301. In this example, the first channel 321 also extends along the direction of the first axis 301.

As shown in FIGS. 29 to 41, the miter saw 300 further includes a first locking mechanism 36. The first locking mechanism 36 includes at least a first state, a second state, and a third state. When the first locking mechanism 36 is in the first state, the first locking mechanism 36 locks the rotation of the cutting mechanism 33 relative to the workbench 32 about the first axis 301. When the first locking mechanism 36 is in the second state, the first locking mechanism 36 allows the rotation of the cutting mechanism 33 relative to the workbench 32. When the first locking mechanism 36 is in the third state, the first locking mechanism 36 allows the cutting mechanism 33 to rotate along a preset direction to a set position. When the first locking mechanism 36 is out of the third state, the first locking mechanism 36 restrains the cutting mechanism 33 from continuing moving along the preset direction to be beyond the set position after the cutting mechanism 33 rotates along the preset direction to the set position. That is to say, when the first locking mechanism 36 is in the third state, the rotation of the cutting mechanism 33 can be positioned by the first locking mechanism 36. In other words, when the first locking mechanism 36 is in the third state, the cutting mechanism 33 and the support base 35 are in the state of rotating freely. After the operator operates the cutting mechanism 33 to the set position, the first locking mechanism 36 may be operated to be out of the third state, and the first locking mechanism 36 completes positioning the rotation of the cutting mechanism 33. In this example, the cutting mechanism 33 can be limited to the set position and is not rotatable along another direction. In another alternative example, the cutting mechanism 33 may continue moving along another direction, which is specifically related to the structure of the first locking mechanism 36. The "set position" to which the cutting mechanism 33 is limited may be a point, that is, a positioning point. Alternatively, the cutting mechanism 33 may be movable within a certain range. In this case, two adjacent positioning points exist, and the set position is between the two positioning points. According to an actual requirement of the operator, the "preset direction" may refer to a clockwise rotation about the first axis 301 or a counterclockwise rotation about the first axis 301.

The first locking mechanism 36 includes an operation handle 360 disposed at a second end 32b of the workbench and used for an operation to switch a state of the first locking mechanism 36. It is to be understood that "the second end 32b of the workbench" refers to an end that is different from or on a different side from the first end 32a of the workbench, and "the second end 32b of the workbench" is not limited to the end that is directly opposite to "the first end 32a of the workbench". In this example, to facilitate the operation of the operator, the operation handle 360 is disposed on a side surface 32b2 of the second end of the workbench. In this example, the whole first locking mechanism 36 extends generally along the first axis 301.

The operation handle 360 includes at least a first position corresponding to the first state, a second position corresponding to the second state, and a third position corresponding to the third state. The operation handle 360 reciprocates along a first direction F1 to switch among the first position, the second position, and the third position. In this example, the operation handle 360 reciprocates along the first direction F1 about a second straight line 302 to switch the state of the first locking mechanism 36. In this example, the second straight line 302 is parallel to or coincides with the first axis 301. Of course, the second straight line 302 may intersect with the first axis 301. In another alternative example, the operation handle 360 may perform linear reciprocation along the first direction F1, that is, a translational slide. The movement of the operation handle 360 to switch at least three working states of the first locking mechanism 36 is limited to one direction, thereby facilitating the operation of the operator and making a switching action more continuous and simpler. On the other hand, the three states can be switched by one operation handle 360, which is more conducive to a single-handed operation of the operator. To improve the comfort of the switchover of the operator, when the operation handle 360 is switched among the three positions, the edge of the operation handle 360 is not beyond the bottom of the base 31. In this way, the operator does not interfere with or hit against a placement surface or the ground when using the operation handle 360.

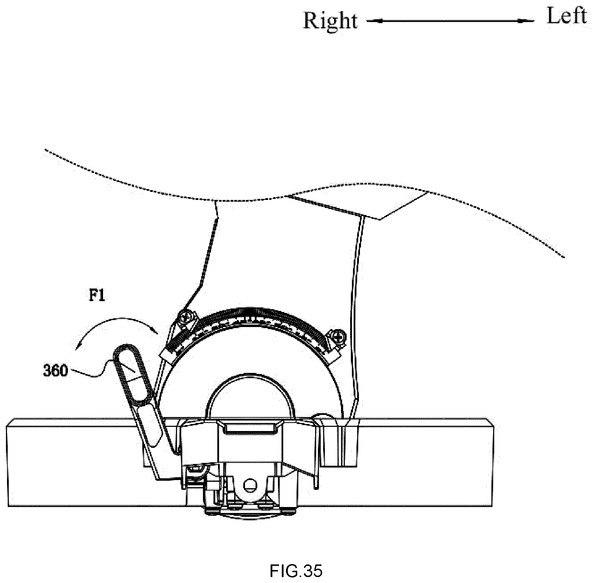

The operation handle 360 moves among the first position, the second position, and the third position under the action of an external force, as shown in FIGS. 35 to 40. The second position is between the first position and the third position, and the second position is an initial position. It is to be noted that the first position, the second position, or the third position mentioned above is not necessarily limited to the position shown in the figure. The position shown in the figure is a limit position or a critical position for implementing a state of the first locking mechanism 36 in this example. As long as the first locking mechanism 36 can implement the function described by the preceding state, the first locking mechanism 36 may be considered to have arrived at the corresponding position, and the position may be a position between the first position, the second position, and the third position shown in the figure.

The first locking mechanism 36 further includes a locking assembly 361 and a stop assembly 363. The locking assembly 361 provides a locking force for locking a relative rotation between the cutting mechanism 33 and the workbench 32 about the first axis 101. The locking assembly 361 includes a working state where the locking assembly 361 provides the locking force for locking the relative rotation between the cutting mechanism 33 and the workbench 32 and a release state that the locking assembly 361 releases the locking force for locking the relative rotation between the cutting mechanism 33 and the workbench 32. The first state of the first locking mechanism 36 refers to that the locking assembly 361 is in the working state when the operation handle 360 is at the first position. The second state of the first locking mechanism 36 or the third state of the first locking mechanism 36 refers to that the locking assembly 361 is in the release state when the operation handle 360 is at the second position or the third position. The stop assembly 363 provides multiple preset positions. After a preset position is selected through the operation handle 360, the stop assembly 363 restrains the cutting mechanism 33 from continuing moving along the preset direction. The stop assembly 363 includes a positioning state where the multiple preset positions may be selected. In this case, the cutting mechanism 33 is rotatable. The stop assembly 363 also includes a restraint state where the cutting mechanism 33 is restrained from continuing moving along the preset direction to be beyond the selected preset position. When the first locking mechanism 36 is in the third state, that is, the operation handle 360 is at the third position, the stop assembly 363 is in the positioning state. When the first locking mechanism 36 is out of the third state, that is, the operation handle 360 leaves the third position, the stop assembly 363 restrains the cutting mechanism 33 from continuing moving along the preset direction, and the stop assembly is in the restraint state.

The first locking mechanism 36 further includes a drive assembly 362 formed on or connected to the operation handle 360. The drive assembly 362 is connected to the locking assembly 361 and the stop assembly 363 separately.

The drive assembly 362 includes a first drive rod 3621 connected to or formed on the operation handle 360, a second drive rod 3622 connected to the locking assembly 361, and a first transmission portion 3623 connected to the stop assembly 363. The second drive rod 3622 is connected to or formed on the first drive rod 3621. In this example, the second drive rod 3622 is formed on the first drive rod 3621, and the first transmission portion 3623 is connected to or formed on the first drive rod 3621. The three states are switched by the one operation handle 360, which is more conducive to the single-handed operation of the operator. It is to be understood that the one operation handle 360 drives the first drive rod 3621, and the first drive rod 3621 controls the locking assembly 361 and the stop assembly 363 through the second drive rod 3622 and the first transmission portion 3623, respectively.

In this example, the first drive rod 3621 is directly connected to the operation handle 360 so that both the first drive rod 3621 and the operation handle 360 rotate about the second straight line 302. Of course, it is to be understood that the first drive rod 3621 and the operation handle 360 may be the same component. In this example, both the first drive rod 3621 and the second drive rod 3622 rotate about the second straight line 302.

The support base 35 is fixedly connected to the workbench 32, and the rack 341 is pivotally connected to the support base 35. The rack 341 includes a pivot portion 3411. The pivot portion 3411 is pivotally connected to the support base 35 and transfers the rotation of the rack 341. The pivot portion 3411 and the support base 35 may communicate with each other to form an accommodation space. In this example, the accommodation space is a second accommodation space 34a. It is to be understood that the rotation of the cutting mechanism 33 relative to the workbench 32 about the first axis 301 is implemented through the rotation of the rack 341 relative to the support base 35 about the first axis 301. In addition, the locking assembly 361 and the stop assembly 363 are basically disposed in the second accommodation space 34a.

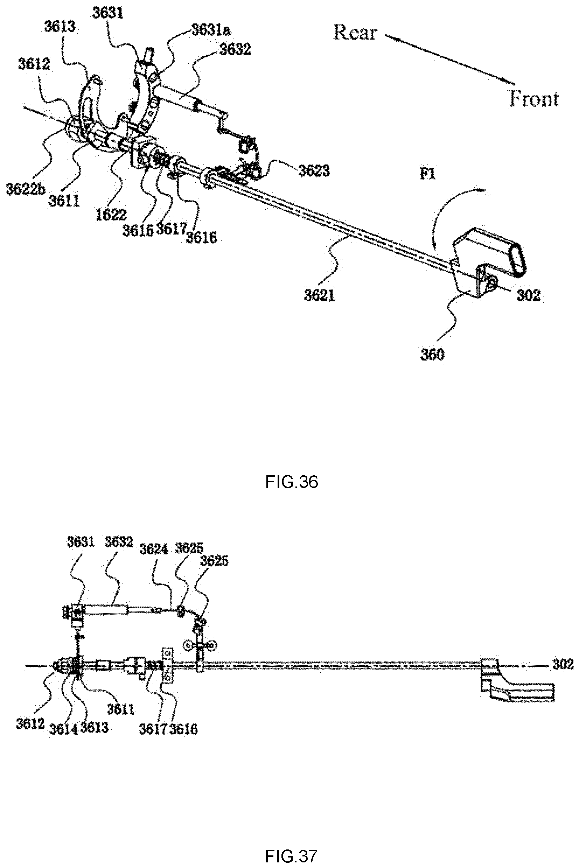

As shown in FIGS. 36 to 42, the locking assembly 361 includes a first fixing member 3611 movably connected to the second drive rod 3622 and fixedly connected to the support base 35. The second fixing member 3612 is connected to an end of the second drive rod 3622. A locking piece 3613 is penetrated through by the second drive rod 3622 and disposed between the first fixing member 3611 and the second fixing member 3612. A first elastic member 3614 is disposed between the locking piece 3613 and the second fixing member 3612. In some examples, the end of the second drive rod 3622 facing away from the first drive rod 3621 is a second end 3622b, and the second end 3622b has a drive section. In this example, the second end 3622b is provided with a threaded section. The first fixing member 3611 and the locking piece 3613 are fixedly connected to the housing of the support base 35, the locking piece 3613 is further connected to the rack, and the locking piece 3613 is provided with a slide slot so that the second drive rod 3622 may slide in the slide slot during the rotation of the cutting mechanism. The second fixing member 3612 is fixedly connected to the second end 3622b of the second drive rod 3622, the first elastic member 3614 is disposed between the second fixing member 3612 and the locking piece 3613, and part of the housing of the support base 35 is disposed between the first fixing member 3611 and the locking piece 3613. When the second drive rod 3622 is driven by the operation handle 360 to rotate about the second straight line 302, that is, the operation handle 360 rotates from the second position to the first position, under the action of the threaded section, the second drive rod 3622 moves toward the front of the miter saw 300 along the second straight line 302, the second fixing member 3612 presses the first elastic member 3614, and the locking piece 3613 and the housing of the support base 35 are pressed to the first fixing member 3611. Thus, the locking assembly 361 locks the rotation between the support base 35 and the rack 341, the locking assembly 361 is in the working state, and the first locking mechanism 36 enters the first state. When the second drive rod 3622 is driven by the operation handle 360 to rotate along an opposite direction about the second straight line 302, that is, the operation handle 360 rotates from the first position to the second position, the second drive rod 3622 moves toward the rear of the miter saw 300 along the second straight line 302. Under the action of a restoration force of the first elastic member 3614, the second drive rod 3622 drives the second fixing member 3612 more quickly to move away from the locking piece 3613 to complete unlocking the locking assembly 361. Thus, the locking assembly is in the release state, the rotation of the cutting mechanism 33 is released, and in this case, the first locking mechanism 36 may enter the second state or the third state.

The locking assembly 361 further includes a clutch portion 3615 that is connected to the first drive rod 3621 and the second drive rod 3622. The clutch portion 3615 is further used for restraining the movement of the first drive rod 3621 toward the rear of the miter saw 300 along the direction of the second straight line 302, that is, a further movement in a release process is restrained. The clutch portion 3615 is basically the same as the clutch structure 223 in example two.

The locking assembly 361 further includes a second connector 3616 disposed in front of the clutch portion 3615, a second elastic member 3617 is disposed between the second connector 3616 and the clutch portion 3615, and two ends of the second elastic member 3617 are connected to the second connector 3616 and the clutch portion 3615 separately. The second connector 3616 is sleeved on and movably connected to the first drive rod 3621, and the first drive rod 3621 may slide and rotate in the second connector 3616. The structure of the second connector 3616 and the structure of the second elastic member 3617 are basically the same as that of the connector 229 and that of the second elastic member 228 in example two.

The stop assembly 363 includes a positioning block 3631 and a positioning pin 3632. The positioning block 3631 is disposed in the rack 341, that is, the positioning block 3631 is indirectly connected to the cutting mechanism 33. It is to be understood that the positioning block 3631 may be directly connected to the cutting mechanism 33. Multiple mating portions 3631a are disposed on the positioning block 3631. In this example, the mating portions 3631a are several positioning holes, and the position of each positioning hole corresponds to a different angle to which the rack 341 rotates. The positioning pin 3632 is connected to the first transmission portion 3623. The positioning pin 3632 reciprocates basically along a direction parallel to the second straight line 302. After the positioning pin 3632 is connected to any one of the mating portions 3631a, the cutting mechanism 33 is restrained from continuing rotating. The positioning pin 3632 is at least partially connected to the housing of the support base 35 so that the positioning pin 3632 can only move along the direction parallel to the second straight line 302.

The first transmission portion 3623 includes an eccentric block 3623a, a flexible connector 3624, and a first transmission block 3626. The eccentric block 3623a is connected to the first transmission block 3626 and the flexible connector 3624. The first transmission block 3626 is connected to the first drive rod 3621. Specifically, the first transmission block 3626 is sleeved on the first drive rod 3621. When the first drive rod 3621 rotates, the first transmission block 3626 rotates synchronously with the first drive rod 3621. The first transmission block 3626 is provided with a first extension portion 3626a extending along a radial direction. A rotating shaft 3623b of the eccentric block 3623a is connected to the workbench 32 so that the rotating shaft 3623b of the eccentric block 3623a can oscillate only about an eccentric axis 3623c, where the eccentric axis 3623c is parallel to the second straight line 302. In a length direction, a first eccentric portion 3623d and a second eccentric portion 3623e are disposed on two sides of the rotating shaft 3623b of the eccentric block 3623a separately, where the length direction is in the plane of a left and right direction. Both the first eccentric portion 3623d and the second eccentric portion 3623e extend along a direction perpendicular to the second straight line 302, that is to say, the included angle between the first eccentric portion 3623d and the second eccentric portion 3623e is greater than 90° and less than 380°. The second eccentric portion 3623e is connected to the flexible connector 3624. In this example, the flexible connector 3624 is a steel wire. The first eccentric portion 3623d is selectively connected to the first extension portion 3626a. The first extension portion 3626a and the eccentric block 3623a change a transmission direction of the first drive rod 3621. The flexible connector 3624 is slidably connected to the workbench 32 by the multiple first fixing structures 3625. Specifically, the flexible connector 3624 is mounted on a side of the first channel 321. One end of the flexible connector 3624 is connected to the second eccentric portion 3623e, and the other end of the flexible connector 3624 is connected to the positioning pin 3632.

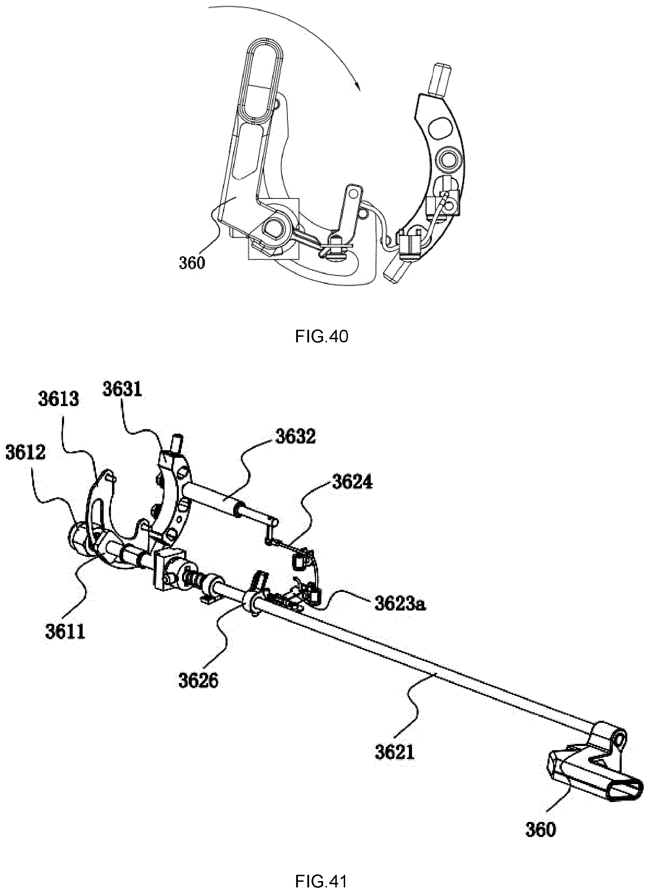

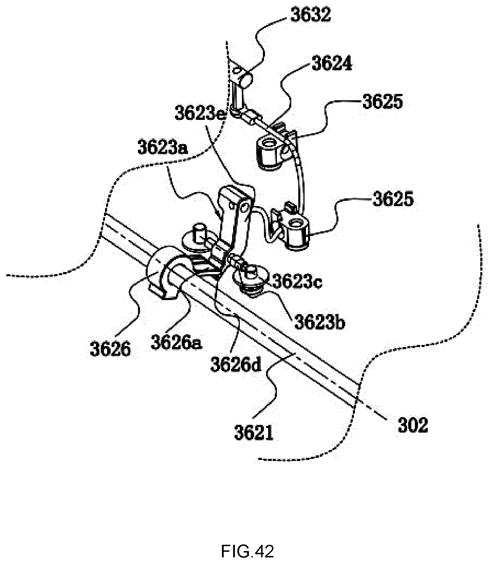

When the first locking mechanism 36 is in the third state, that is, the operation handle 360 is at the third position, the stop assembly 363 is in the positioning state, as shown in FIGS. 41 and 42. The rotation of the first drive rod 3621 causes the first transmission block 3626 to rotate synchronously with the first drive rod 3621. The first extension portion 3626a presses down the first eccentric portion 3623d to rotate the eccentric block 3623a. Further, the second eccentric portion 3623e rotates upward, the second eccentric portion 3623e drives the flexible connector 3624 to slide backward, the flexible connector 3624 drives the positioning pin 3632 to move backward along the direction parallel to the second straight line 302, and the positioning pin 3632 is disengaged from the positioning block 3631. In this case, the cutting mechanism 33 is operated to move, that is, the positioning block 3631 is operated to rotate. When the cutting mechanism 33 is operated to rotate to a required angle and the operation handle 360 is caused to move to the second position in an opposite direction, the first extension portion 3626a moves in the opposite direction and then does not press down the first eccentric portion 3623d, the eccentric block 3623a rotates and is reset, the second eccentric portion 3623e rotates downward, the positioning pin 3632 moves forward along the direction parallel to the second straight line 302, and the positioning pin 3632 is connected to the positioning block 3631. Thus, the positioning pin 3632 enters one positioning hole on the positioning block 3631. Since the positioning pin 3632 is at least partially connected to the support base 35, the cutting mechanism 33 may be positioned to the set position by the positioning pin 3632.

In other examples, the positioning hole may be a long special-shaped hole such as an arc-shaped hole. Two ends of the hole correspond to specific cutting angles separately so that the positioning pin 3632 is rotatable within a certain set range, that is, the cutting mechanism 33 is rotatable within a certain set range. When the positioning pin 3632 rotates to the two ends, the positioning pin 3632 corresponds to two set angles separately. The operator can quickly determine the required angle range, instead of going to the rear of the miter saw 300 to confirm a scale.

Therefore, when the cutting mechanism is controlled to rotate relative to the workbench, the process is as follows: when the operation handle 360 is at the second position, that is, the initial position, the locking assembly 361 is in the release state, and in this case, the positioning pin 3632 in the stop assembly 363 is inserted into the positioning block 3631. The operation handle 360 is moved to the third position, the locking assembly 361 is in the release state, and the positioning pin 3632 in the stop assembly 363 is disengaged from the positioning block 3631, that is to say, the stop assembly 363 is in the positioning state. In this case, the cutting mechanism 33 is operated to be capable of rotating freely relative to the workbench 32 about the first axis 301. When the cutting mechanism 33 is operated to rotate to the required angle, the operation handle 360 is caused to move in the opposite direction to leave the third position. In this example, when the operation handle 360 arrives at the second position, the positioning pin 3632 in the stop assembly 363 is inserted into the positioning block 3631, and the rotation of the cutting mechanism 33 is limited to the set position for the rotation to the required angle. In this example, the cutting mechanism 33 cannot rotate any longer. In other examples, in an original rotation direction, the cutting mechanism 33 may be beyond the set position and continue moving. That is to say, the set position is a limit position to which the cutting mechanism moves in the original rotation direction. When the operation handle 360 continues moving to the first position, the locking assembly 361 is in the locked state, and the rotation of the cutting mechanism 33 relative to the workbench 32 about the first axis 301 is stably locked. The cutting mechanism 33 may perform a cutting operation.

As shown in FIG. 29, FIG. 30, and FIGS. 43 to 51, in addition to the cutting mechanism 33 rotatable relative to the workbench 32, the workbench 32 of the miter saw 300 is rotatable relative to the base 31, which aims at forming an inclined cut on the workpiece. The axis about which the workbench 32 rotates relative to the base 31 is a miter axis 303. In this example, the miter axis 303 extends along the up and down direction. Specifically, the miter axis 303 is perpendicular to the first axis 301.

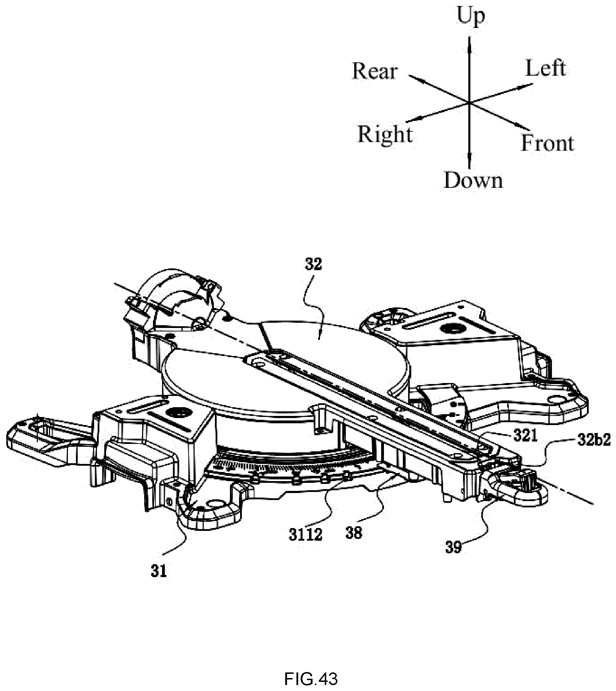

As shown in FIGS. 43 to 51, the miter saw 300 further includes a locking mechanism for a miter angle, a positioning mechanism 38, and an operation mechanism 39. The locking mechanism for the miter angle provides a locking force for locking a relative rotation between the base 31 and the workbench 32. In this example, for convenience of differentiation, the locking mechanism for the miter angle is referred to as a second locking mechanism 37. The positioning mechanism 38 provides multiple preset positions and optionally limits the workbench 32 to a selected preset position relative to the base 31. The operation mechanism 39 is held and operated to rotate the workbench 32 relative to the base 31. The operation mechanism 39 includes a first operation portion 39a, where a first transmission assembly 392 drives the second locking mechanism 37 so that the locking force is provided. The first operation portion 39a includes a first position for the relative rotation between the base 31 and the workbench 32 to be correspondingly locked and a second position for the relative rotation between the base 31 and the workbench 32 to be correspondingly released. A second operation portion 39b is disposed in a range in which the first operation portion 39a and the second operation portion 39b are capable of being operated simultaneously with a single hand, where a second transmission assembly 394 drives the positioning mechanism 38 so that a limitation between the workbench 32 and the base 31 to the preset position is released. The second operation portion 39b relative to the first operation portion 39a includes: a third position for the workbench 32 and the base 31 to be correspondingly limited to the preset position and a fourth position for the limitation of the positioning mechanism 38 on the workbench 32 and the base 31 to be correspondingly released. "The range in which the first operation portion 39a and the second operation portion 39b are capable of being operated simultaneously with the single hand" refers to a range in which when or after the operator holds and can apply an operation force to the first operation portion 39a, at least a finger of the same hand can touch and apply the operation force to the second operation portion 39b. In this way, after both the first operation portion 39a and the second operation portion 39b are disposed in the range in which the single-handed operation can be performed, the first operation portion 39a and the second operation portion 39b on the operation mechanism 39 can be touched and operated by the single hand holding the operation mechanism 39, and the rotation of the workbench 32 relative to the base 31 can be controlled by the single hand without the cooperation of the other hand. Thus, the operation is relatively convenient.

In this example, the first operation portion 39a and the second operation portion 39b are connected as a whole component. However, the first operation portion 39a and the second operation portion 39b control the second locking mechanism 37 and the positioning mechanism 38 through the two transmission assemblies. The transmission assemblies do not interfere with each other. The locking and positioning of the rotation between the workbench 32 and the base 31 are separately controlled through the two transmission assemblies that are independent of each other so that the control is more accurate.

In this example, the second locking mechanism 37, the positioning mechanism 38, and the operation mechanism 39 also extend basically along the length direction of the first channel 321. Specifically, the second locking mechanism 37, the positioning mechanism 38, and the operation mechanism 39 extend along a direction parallel to the first axis 301. Most of the second locking mechanism 37, the positioning mechanism 38, the first transmission assembly 392, and the second transmission assembly 394 are disposed under the workbench 32. The first operation portion 39a and the second operation portion 39b are connected to the front side 32b2 of the second end 32b of the workbench, that is to say, the first operation portion 39a, the second operation portion 39b, and the operation handle are disposed at the same end relative to the workbench 32. To facilitate the operation of the user, the first operation portion 39a, the second operation portion 39b, and the operation handle are disposed at different positions of the same end relative to the workbench 32.

In this example, the first operation portion 39a includes a first trigger 391. During a specific operation, the operator holds the first trigger 391 and causes the first trigger 391 to move between the first position and the second position. The second operation portion 39b includes a second trigger 393 disposed on the first trigger 391. During a specific operation, the operator holds the second trigger 393 and causes the second trigger 393 to move between the third position and the fourth position. Specifically, the first trigger 391 is rotatably connected to the housing of the second end 32b of the workbench about a third straight line 305. In this example, the third straight line 305 is perpendicular to or intersects with the first axis 301. The whole first trigger 391 is almost in the shape of a flat plate, and the size of the first trigger 391 is suitable for a single-handed hold of an adult. A third accommodation space 391a is formed in the middle of the first trigger 391, and the second trigger 393 is disposed in the third accommodation space 391a. The second trigger 393 rotates about a fourth straight line 306 parallel to the third straight line 305. The second trigger 393 is disposed on the surface of the first trigger 391 opposite to a palm. It is to be understood that when the operator holds the first trigger 391, the second trigger 393 is held by the operator at the same time. Therefore, when the first trigger 391 is operated to switch between the first position and the second position, the second trigger 393 is also moved together with the first trigger 391 because the second trigger 393 is on the first trigger 391, which may be understood as follows: when the first trigger 391 moves, the second trigger 393 is necessarily driven to move. The second trigger 393 may move relative to the first trigger 391, that is, the second trigger 393 may move about the fourth straight line 306 so that the second trigger 393 switches between the third position and the fourth position relative to the first trigger 391.

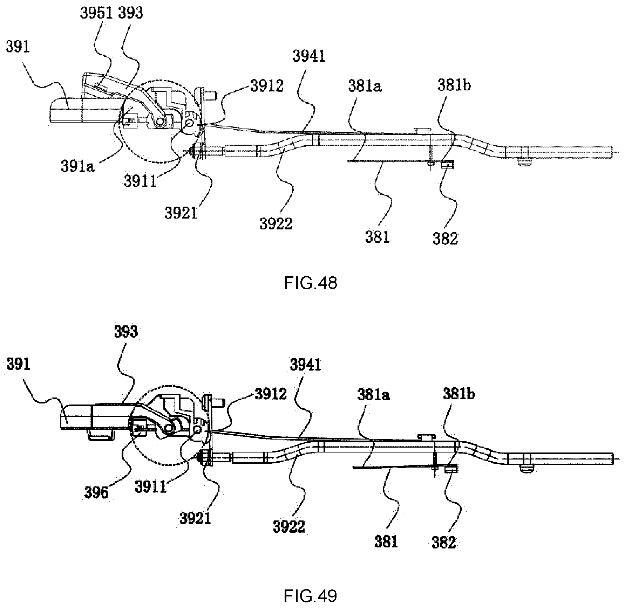

As shown in FIG. 48, when the first trigger 391 is at the second position, the first trigger 391 is at an initial position. In this case, the second locking mechanism 37 is at the second position for the relative rotation between the base 31 and the workbench 32 to be released. The initial position of the second trigger 393 is the third position. Specifically, the second trigger 393 is at the third position relative to the first trigger 391, which refers to that the second trigger 393 is beyond the first trigger 391. That is to say, the second trigger 393 is closer to the hold position of the operator's hand. The fourth position of the second trigger 393 is closer to the first trigger 391 than the third position. To facilitate the operation of the operator, the second trigger 393 at the fourth position is flush with the first trigger 391 relative to the hold surface of the hand. In this case, the limitation of the positioning mechanism 38 on the relative rotation between the workbench 32 and the base 31 is released.

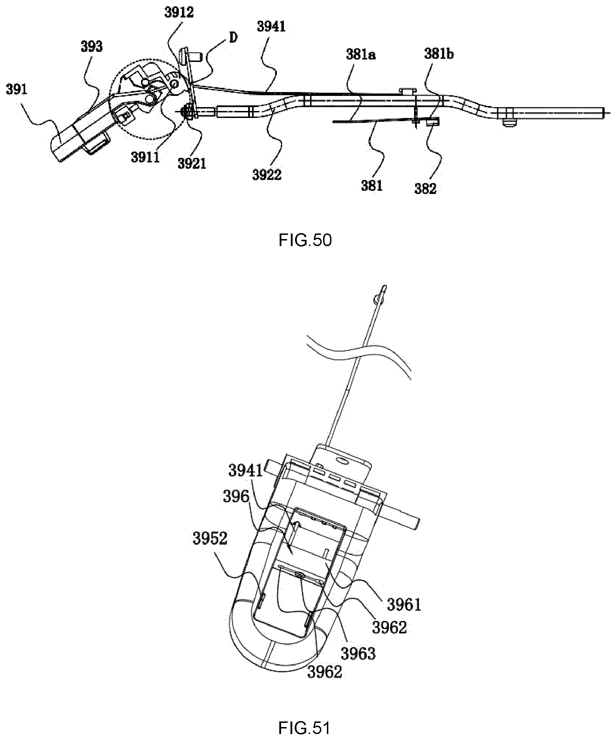

Therefore, when the operator holds the operation mechanism 39, that is, the first trigger 391, the second trigger 393 is first switched from the third position to the fourth position. As shown in FIG. 49, in this case, the first trigger 391 is at the second position, and the second trigger 393 is at the fourth position. Correspondingly, the second locking mechanism 37 is in the state of releasing the locking force, and at the same time, the positioning mechanism 38 is in the state of releasing the positioning limitation. That is, the operator may rotate the workbench 32 through the operation mechanism 39 so that the workbench 32 rotates relative to the base 31. When the workbench 32 rotates to a proper position, the workbench 32 and the base 31 need to be limited in this position. The operator relaxes the hold slightly to release the second trigger 393 so that the second trigger 393 is beyond the first trigger 391. In this case, the second trigger 393 is at the third position, and the positioning mechanism 38 limits the workbench 32 and the base 31 to the preset position. It is to be understood that a limiting force provided by the positioning mechanism 38 is not sufficient to ensure that the workbench 32 and the base 31 do not move relative to each other during the cutting operation. When the relative rotation between the workbench 32 and the base 31 needs to be locked, the first trigger 391 is operated to move to the first position, as shown in FIG. 50. The second locking mechanism 37 provides the locking force to lock the relative rotation between the workbench 32 and the base 31. In this case, the position of the second trigger 393 does not affect the provision of the locking force by the second locking mechanism 37.

To enable the first trigger 391 to be kept at the first position, the first operation portion 39a further includes a first limiting structure 3912 formed on or connected to the first trigger 391. The first limiting structure 3912 is a cam structure disposed behind a rotating shaft 3911 of the first trigger. On the one hand, the distal end on the cam structure needs the external force to move to the proximal end on the cam structure such that a dead center D can be formed for the limitation. On the other hand, the cam can convert the rotation into linear reciprocation such that the first transmission assembly 392 is driven to control the second locking mechanism 37. It is to be understood that this structure is not limited to this example. A specific structure may be understood as a similar example to the present invention as long as it can be implemented that the first trigger 391 must be moved from the first position to the second position under the action of the external force and the rotation of the first trigger 391 is converted into the linear reciprocation. In addition, the preceding two functions may be implemented by one component or two components separately.

The first drive assembly 392 includes a first drive portion 3921 and a first transmission rod 3922. The first drive portion 3921 is selectively in contact with the first limiting structure 3912, and the first transmission rod 3922 is connected to the first drive portion 3921. The first drive portion 3921 converts the rotation of the first trigger 391 into the reciprocation of the first transmission rod 3922. The first transmission rod 3922 is connected to the second locking mechanism 37. The first transmission rod 3922 is a rigid structure and can reciprocate between the first operation portion 39a and the second locking mechanism 37 to further drive the second locking mechanism 37 to provide the locking force. The first drive portion 3921 is an elastic deformation component, and specifically, the first drive portion 3921 is an elastic piece. The first drive portion 3921 is mounted on the rear side of the first trigger 391 along a direction perpendicular to the first axis 301. The first drive portion 3921 is mounted on the workbench 32, and the point where the first drive portion 3921 is mounted may be used as a reference point of elastic deformation of the first drive portion 3921. When the first trigger 391 switches from the second position to the first position, the contact between the cam structure of the first limiting structure 3912 and the first drive portion 3921 moves from a small-diameter position to a large-diameter position, and the first drive portion 3921 deforms backward along the first axis 301, driving the first transmission rod 3922 to move backward. When the first trigger 391 is at the first position, the distal end of the cam structure is in contact with the first drive portion 3921 and the contact surface is closer to a small-diameter surface on a downstream side of the movement of the distal end. That is to say, when the first trigger 391 is at the first position, the contact between the cam structure and the first drive portion 3921 is behind the dead center D of the cam structure. Therefore, the first trigger 391 is kept at the first position, and the first drive portion 3921 is continuously kept in the state of deforming backward along the first axis 301. Therefore, the second locking mechanism 37 continuously provides the locking force for locking the workbench 32 and the base 31. When the first trigger 391 switches from the first position to the second position, the contact between the cam structure of the first limiting structure 3912 and the first drive portion 3921 moves from the large-diameter position to the small-diameter position, or the cam structure of the first limiting structure 3912 changes from the state of being in contact with the first drive portion 3921 to the state of being not in contact with the first drive portion 3921. In this case, the first drive portion 3921 is elastically reset, moving forward to be reset and driving the first transmission rod 3922 to move forward. The second locking mechanism 37 releases the locking force for locking the workbench 32 and the base 31 and further unlocks the rotation between the workbench 32 and the base 31.

In this example, the first transmission rod 3922 reciprocates along the direction of the first axis 301. The first transmission rod 3922 is connected to the workbench 32, thereby restraining the movement of the first transmission rod 3922 along the up and down direction and reducing a movement component force of the first transmission rod 3922. In this example, the second locking mechanism 37 is constituted by the first transmission rod 3922 and the base 31. When the second locking mechanism 37 needs to provide the locking force, the first transmission rod 3922 abuts against the base 31 along the direction of the first axis 301, and the base 31 is limited by the friction force between the two. In another alternative example, the second locking mechanism may be constituted by two components connected to the second locking mechanism 37 and the base 31. Since the second locking mechanism belongs to the related art and is disclosed in other examples, only one of the second locking mechanisms is disclosed in this example. The details are not repeated here.

The second transmission assembly 394 includes a second transmission portion 3941, and the positioning mechanism 38 is driven, through the second transmission portion 3941, by the drive force of the second operation portion 39b to deform. The second transmission portion 3941 at least partially includes a flexible structure so that the second transmission portion 3941 deforms under the action of the external force. In this example, the second transmission portion 3941 is a steel wire, or part of the second transmission portion 3941 is constituted by a steel wire. The flexible structure is used so that the second transmission portion 3941 is assembled without being limited when the second transmission portion 3941 is connected to the second operation portion 39b and the positioning mechanism 38. The flexible structure can deform according to an assembly path, reducing the requirement for the accuracy of the assembly. One end of the second transmission portion 3941 is connected to the rear end of the second trigger 393. Specifically, the end of the steel wire is fixed after passing through the rear end of the second trigger 393. The other end of the second transmission portion 3941 is connected to the positioning mechanism 38.

The positioning mechanism 38 includes a first adjustment member 381. The first adjustment member 381 is an elastic structure and is connected to the other end of the second transmission portion 3941. Specifically, the first adjustment member 381 is disposed under the second transmission portion 3941. A first end 381a of the first adjustment member is connected to the housing of the workbench 32 by a second fixing structure 383 so that the first adjustment member may use the connection of the second fixing structure 383 as a reference point of elastic deformation. A second end 381b of the first adjustment member is disposed above a second adjustment member 311 of the base 31, and the second adjustment member 311 is provided with a scale required by the adjustment of the rotation of the workbench 32 in the horizontal direction. Further, a positioning member 382 is disposed at the second end 381b of the first adjustment member, and several positioning slots 3112 are disposed on the second adjustment member 311. The several positioning slots 3112 correspond to different rotation angles of the workbench 32 and the cutting mechanism 33. Specifically, the positioning member 382 protrudes toward the lower side, and the shape of the protrusion is consistent with the shape of a positioning slot 3112.

As shown in FIGS. 43, 44, and 48, when the second trigger 393 is at the third position, the positioning member 382 is connected in the positioning slot 3112 or the positioning member 382 is in contact with the second adjustment member 311 and near the positioning slot 3112, and the workbench 32 is continuously rotated so that the positioning member 382 can enter the positioning slot 3112. When the second trigger 393 is at the third position, the first adjustment member 381 does not perform the elastic deformation, or the first adjustment member 381 performs the elastic deformation, but the amount of deformation is not sufficient to cause the positioning member 382 to leave the positioning slot 3112. As shown in FIG. 49, when the second trigger 393 switches from the third position to the fourth position, the second trigger 393 rotates about a fourth straight line 106, thereby driving the second transmission portion 3941 to move away from the base 31. In this example, a cam structure is disposed at the position of the second trigger 393 for the connection to the second transmission portion 3941. Further, the rotation of the second trigger 393 is converted into the linear reciprocation of the second transmission portion 3941. Under the guide of the second fixing structure 383, the part of the second transmission portion 3941 connected to the second end 381b of the first adjustment member is basically perpendicular to the second end 381b of the first adjustment member and is located on the second end 381b of the first adjustment member. When the second transmission portion 3941 moves away from the base 31, the part of the second transmission portion 3941 connected to the second end 381b of the first adjustment member moves upward, driving the second end 381b of the first adjustment member to deform upward, the positioning member 382 leaves the positioning slot 3112, and an adjustment assembly leaves the base 31. In this case, the release state is entered, and the workbench 32 is rotatable relative to the base 31. When the operator releases the hold of the second trigger 393, in order that the second trigger 393 is enabled to be automatically reset from the fourth position to the third position, the second operation portion 39b is provided with a biasing element to provide a biasing force for the second trigger 393 to be reset from the fourth position to the third position. In this example, the biasing element (not shown in the figure) is a torsion spring connected to the first trigger 391 and the second trigger 393. In another alternative example, no biasing element may be disposed, and the second trigger 393 is driven from the fourth position to the third position by an elastic reset force of the first adjustment member 381.

The operation mechanism 39 further includes a limiting assembly 395 for keeping the second trigger 393 at the fourth position. It is to be understood that the limiting function of the positioning mechanism 38 needs to be not in use temporarily during an actual operation. In this case, the second trigger 393 is kept at the fourth position by the limiting assembly 395 so that the limitation of the positioning mechanism 38 can be kept in a release state. The limiting assembly 395 includes a first limiting portion 3951 disposed on the second operation portion 39b and a second limiting portion 3952 disposed on the first operation portion 39a and mating with the first limiting portion 3951. In this example, the first limiting portion 3951 is a slot or a snap disposed on the upper sidewall of the second trigger 393, and the second limiting portion 3952 is a slot or a snap disposed on a sidewall of the first trigger 391 and mating with the snap. When the second trigger 393 needs to be kept at the fourth position, the second trigger 393 is continuously pressed, and the first limiting portion 3951 and the second limiting portion 3952 are engaged with each other so that the second trigger 393 is locked. In this case, the second trigger 393 is located at a fifth position lower than the fourth position. When the limitation needs to be released, the second trigger 393 is reversed such that the first limiting portion 3951 is disengaged from the second limiting portion 3952 and the limitation is released. In other examples, a specific structure of the first limiting portion 3951 and a specific structure of the second limiting portion 3952 are not limited to the snap limitation as long as the first limiting portion 3951 and the second limiting portion 3952 can mate with each other to limit a relative movement and the limitation may be released by the external force.

For mounting the second transmission portion 3941 more conveniently, when the length of the second transmission portion 3941 is selected, a length used for the connection of the second trigger 393 to the first adjustment member 381 by the second transmission portion 3941 is greater than the actual length between the second trigger 393 and the first adjustment member 381. The length of the second transmission portion 3941 between the second trigger 393 and the first adjustment member 381 is adjusted by a second tension adjustment member 396 disposed at the end of the second transmission portion 3941. It is to be understood that the second tension adjustment member 396 adjusts the length of the second transmission portion 3941 for the connection of the second trigger 393 to the first adjustment member 381 to adjust the tension of the second transmission portion 3941. Further, the difficulty can be adjusted with which the second trigger 393 drives the positioning mechanism 38. On the other hand, the second tension adjustment member 396 is conducive to prolonging the service life of the second transmission portion 3941. In this example, the second tension adjustment member 396 is disposed on the side of the second trigger 393. In another alternative example, the second tension adjustment member 396 may be disposed on the side of the first adjustment member 381. The second tension adjustment member 396 is disposed on the first trigger 391 and includes a body 3961 provided with two through holes 3962 and a detachable fastener 3963 disposed between the two through holes 3962. The second transmission portion 3941 extends into the body 3961 from one through hole 3962 and extends out of the body 3961 from the other through hole 3962. After the fastener 3963 is screwed into the body 3961, the top end of the fastener 3963 presses against the second transmission portion 3941 to fix the second transmission portion 3941 to the body 3961. When the tension of the second transmission portion 3941 needs to be adjusted, the fastener 3963 is loosened, the fastener 3963 no longer presses against the second transmission portion 3941, and the tension of the second transmission portion 3941 can be adjusted.

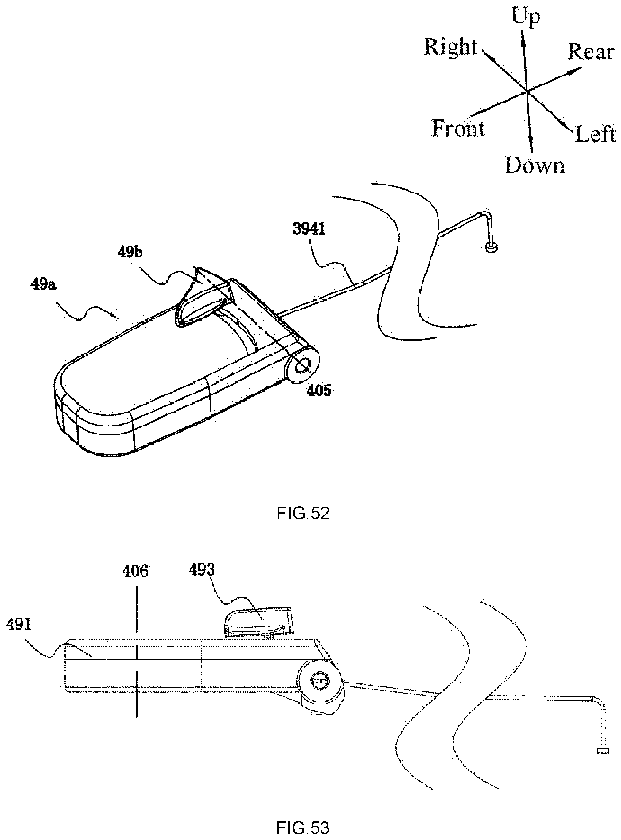

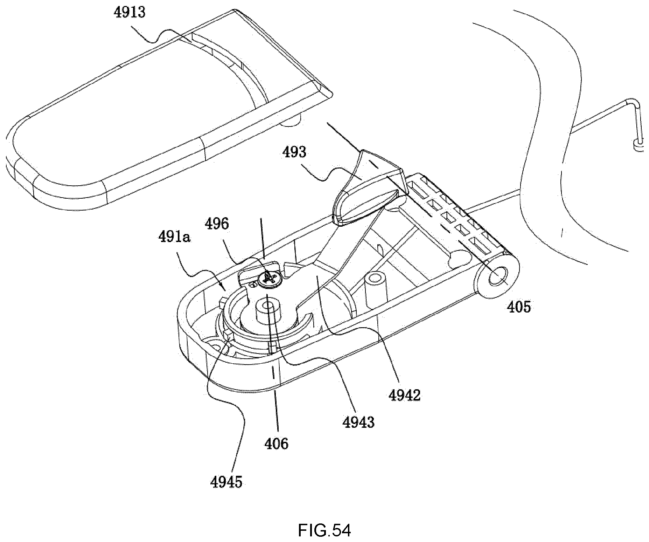

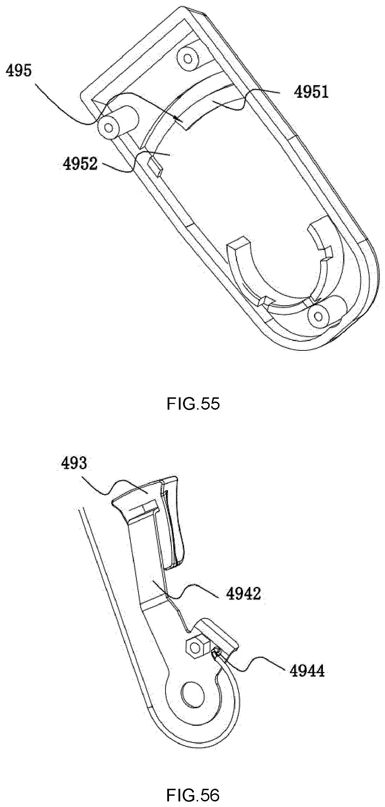

As shown in FIGS. 52 to 56, a miter saw is disclosed in this example. Components of this example the same as or corresponding to those of example three use the corresponding reference numerals or names in example three. For simplicity, only differences between example four and example three are described. The miter saw in this example differs from that in example three in specific structures of a first operation portion 49a and a second operation portion 49b and the like.

In this example, the first operation portion 49a includes a first trigger 491. During a specific operation, the operator holds the first trigger 491 and causes the first trigger 491 to move between a first position and a second position. The first trigger 491 is rotatably connected to the housing of a second end of a workbench about a third straight line 405. The whole first trigger 491 is almost in the shape of a flat plate, and the size of the first trigger 491 is suitable for a single-handed hold of an adult.

The second operation portion 49b includes a second trigger 493 disposed on the first trigger 491. The second trigger 493 oscillates reciprocally on the first trigger 491 about a fourth straight line 406. The fourth straight line 406 is perpendicular to the third straight line 405. Specifically, the fourth straight line 406 extends along the up and down direction. During the specific operation, the operator holds the first trigger 491 and toggles, with a thumb, the second trigger 493 to move between a third position and a fourth position. It is to be understood that when the operator holds the first trigger 491, the second trigger 493 on the first trigger 491 is held by the operator at the same time. Therefore, when the first trigger 491 is operated to switch between the first position and the second position, the second trigger 493 is also moved together with the first trigger 491 because the second trigger 493 is on the first trigger 491, which may be understood as follows: when the first trigger 491 moves, the second trigger 493 is necessarily driven to move. The second trigger 493 may move relative to the first trigger 491, that is, the second trigger 493 may move about the fourth straight line 406 so that the second trigger 493 switches between the third position and the fourth position relative to the first trigger 491.

A third accommodation space 491a is formed in the middle of the first trigger 491, and the second transmission portion 3941 extends into the third accommodation space 491a. A slide slot 4913 is disposed on the first trigger 491, and the third accommodation space 491a communicates with the outside via the slide slot 4913. In this example, a third transmission portion 4942 is disposed between the second trigger 493 and the second transmission portion 3941. The third transmission portion 4942 is at least partially disposed in the third accommodation space 491a. The third transmission portion 4942 is formed on or connected to the second trigger 493 via the slide slot 4913, and the second transmission portion 3941 is connected to the third transmission portion 4942. The third transmission portion 4942 is connected to the first trigger 491 by a rotating shaft 4943 and rotates about the fourth straight line 406. The second transmission portion 3941 is connected to an eccentric portion 4944 of the third transmission portion 4942. The part of the second transmission portion 3941 entering the third accommodation space 491a is connected to the first trigger 491 by a third fixing structure 4945. The third fixing structure 4945 configures the second transmission portion 3941 into the shape of a circular arc using the fourth straight line 406 as the center line of a circle. One end of the shape of the circular arc is connected to the third transmission portion 4942, and the other end of the shape of the circular arc protrudes out of the third accommodation space 491a. The slide slot 4913 is in the shape of a circular arc, and the third position, the fourth position, and a fifth position are successively disposed on the slide slot 4913. In this example, the limiting assembly 495 is a step limiting surface. In the first trigger 491 between the third position and the fourth position, a protrusion portion 4951 is disposed in the third accommodation space 491a. The protrusion portion 4951 is disposed between the third transmission portion 4942 and the first trigger 491. From the fourth position to the fifth position, the protrusion portion 4951 ends. Therefore, this portion forms a recess 4952 with the protrusion portion 4951. When the second trigger 493 moves beyond the fourth position to the fifth position, the third transmission portion 4942 enters the recess 4952, that is, the third transmission portion 4942 is limited in the recess 4952 and cannot be reset to the fourth position. The operator needs to press the second trigger 493 to disengage the third transmission portion 4942 from the recess 4952 and continue to toggle the second trigger 493 to the fourth position so that the second trigger 493 is reset to the fourth position. In this example, a tension adjustment portion 496 is disposed on the third transmission portion 4942. The specific structure of the tension adjustment portion 496 is the same as that in example three.

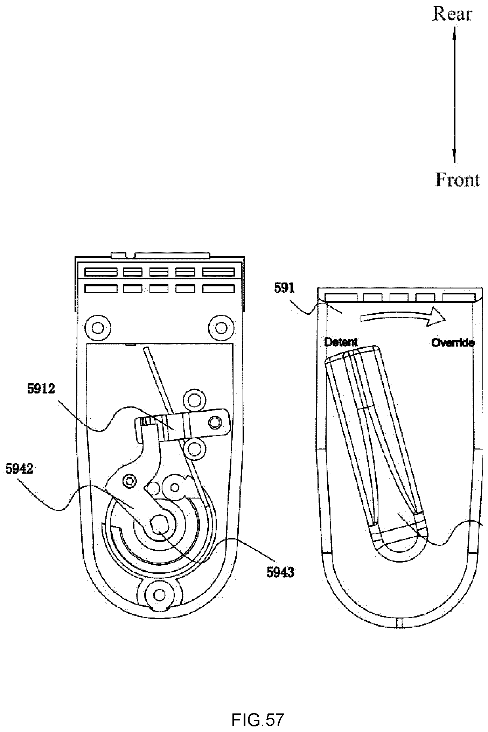

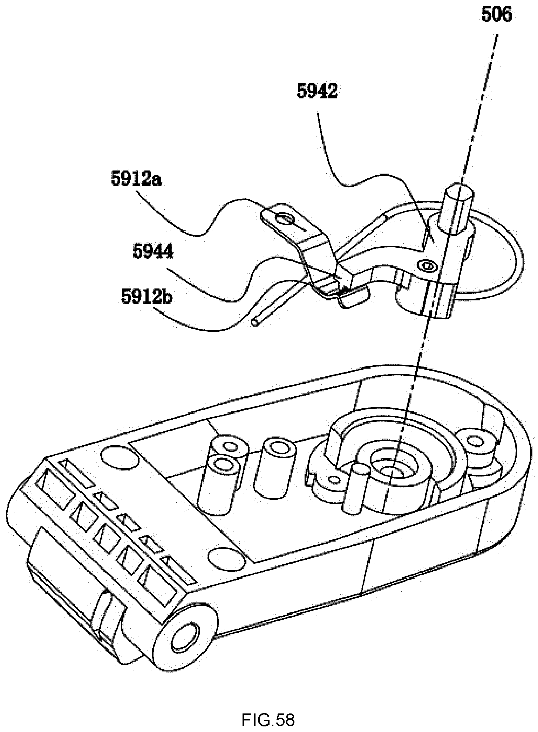

As shown in FIGS. 57 and 58, a miter saw is disclosed in this example. Components of this example the same as or corresponding to those of example four use the corresponding reference numerals or names in example four. For simplicity, only differences between embodiment five and embodiment four are described. The miter saw in this example differs from that in example four in specific structures of a first trigger 591 and a second operation portion 59b and the like.

No slide slot is disposed on the first trigger 591. The second operation portion 59b includes a second trigger 593 and a third transmission portion 5942. The connection between the second trigger 593 and the third transmission portion 593 coincides with a rotating shaft 5943 of the third transmission portion 5942. The third transmission portion 5942 is rotatably connected to the first trigger 591 about a fourth straight line 506. The third transmission portion 5942 includes a first limiting portion 5944, a second limiting portion 5912 is connected to the first trigger 591, and the second limiting portion 5912 is provided with a protrusion surface 5912a. When the second trigger 593 moves from a third position to a fourth position, the first limiting portion 5944 slides on an upstream lower surface 5912b of the second limiting portion 5912. When the second trigger 593 moves from the fourth position to a fifth position, the first limiting portion 5944 passes the protrusion surface 5912a. Therefore, the second limiting portion 5912 is limited by the first limiting portion 5944, and the second trigger 593 cannot be automatically reset from the fifth position to the fourth position. The operator needs to push the second trigger 593 to move from the fifth position to the fourth position, and the first limiting portion 5944 slides over the protrusion face 5912a again to enter the upstream lower surface 5912b so that the second trigger 593 is reset to the fourth position.

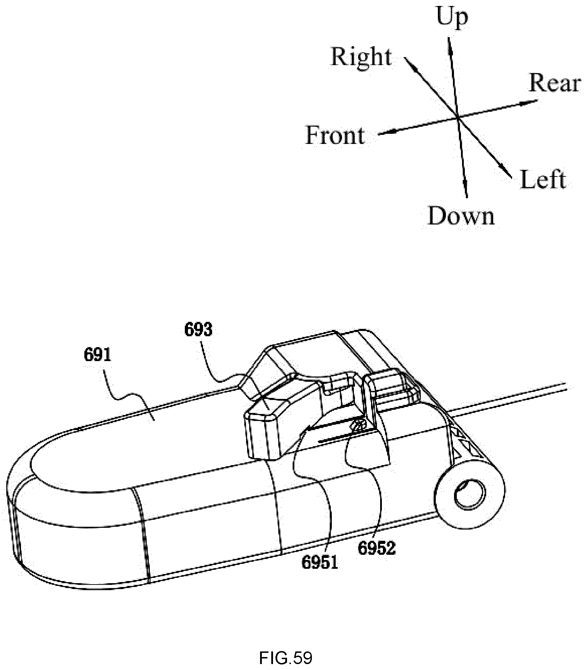

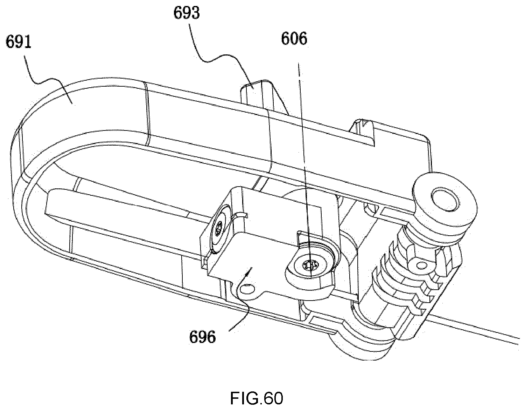

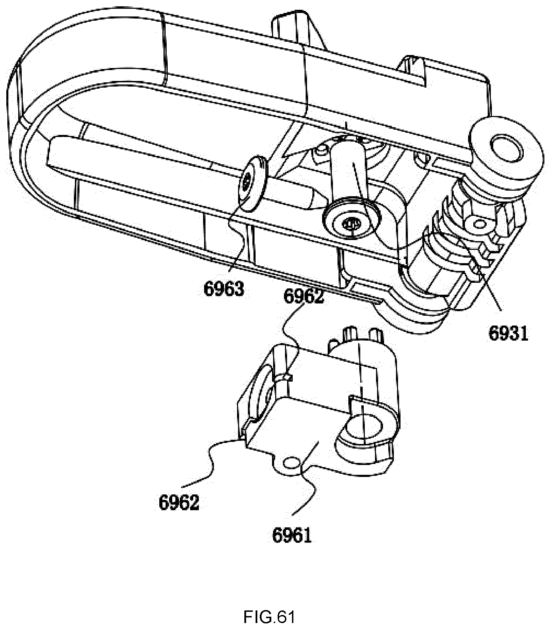

As shown in FIGS. 59 to 61, a miter saw is disclosed in this example. Components of this example the same as or corresponding to those of example five use the corresponding reference numerals or names in example five. For simplicity, only differences between example six and example five are described. The miter saw in this example differs from that in example five in specific structures of a second operation portion and the like.

In this example, a second trigger 693 is rotatably connected to a first trigger 691 by a spool portion 6931. The second trigger 693 rotates about a fourth straight line 606. The second transmission portion 3941 is wounded around the periphery of the spool portion 6931, the second trigger 693 rotates, and the length of the second transmission portion 3941 wounded around the spool portion 6931 changes, thereby controlling a positioning mechanism.

A tension adjustment portion 696 is disposed on the spool portion 6931 and includes a body 6961 provided with two through holes 6962 and a fastener 6963 disposed between the two through holes 6962. The body 6961 is sleeved outside the spool portion 6931. The second transmission portion 3941 extends into the body 6961 from one through hole 6962 and extends out of the body 6961 from the other through hole 6962. The second transmission portion 3941 passes through the tension adjustment portion 696 and then is wound around the spool portion 6931. After the fastener 6963 is screwed into the body 6961, the top end of the fastener 6963 is pressed against the second transmission portion 3941 to fix the second transmission portion 3941 to the body 6961. When the tension of the second transmission portion 3941 needs to be adjusted, the fastener 6963 is loosened, the fastener 6963 no longer presses against the second transmission portion 3941, and the tension of the second transmission portion 3941 can be adjusted.

A limiting assembly includes a first limiting portion 6951 and a second limiting portion 6952. The first limiting portion 6951 is a slot disposed on the bottom of the second trigger 693, and the second limiting portion 6952 is a snap disposed on the upper sidewall of the first trigger 691.

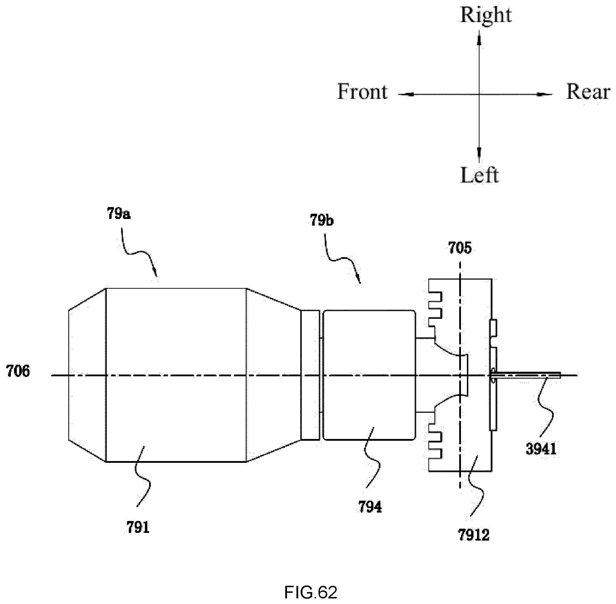

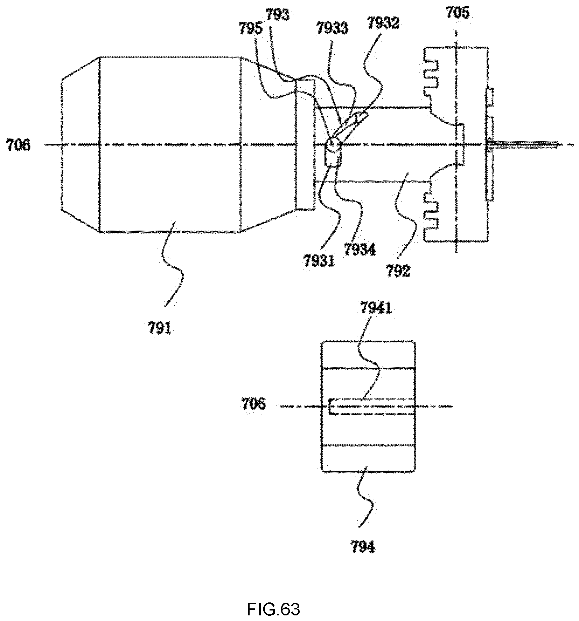

As shown in FIGS. 62 and 63, a miter saw is disclosed in this example. Components of this example the same as or corresponding to those of example three use the corresponding reference numerals or names in example three. For simplicity, only differences between this example and example three are described. The miter saw in this example differs from that in example three in specific structures of a first operation portion 79a and a second operation portion 79b and the like.

In this example, the first operation portion 79a includes a first trigger 791, a first limiting structure 7912, and a first connecting portion 792. The first connecting portion 792 is disposed between the first trigger 791 and the first limiting structure 7912. The first connecting portion 792 may be a separate component and is connected between the first trigger 791 and the first limiting structure 7912. In another alternative example, the first connecting portion 792 is connected to the first trigger 791, or the first connecting portion 792 and the first limiting structure 7912 form one component and then are connected to the first trigger 791.

The first trigger 791 rotates about a third straight line 705. In this example, the third straight line 705 is perpendicular to or intersects with a first axis.

The second operation portion 79b includes a second sleeve 794 and a first shift lever 795. The second sleeve 794 is sleeved on the outer side of the first connecting portion 792, the second sleeve 794 rotates about a fourth straight line 706, and the first trigger 791 is configured to be basically symmetrical with respect to the fourth straight line 706. In this example, the fourth straight line 706 is perpendicular to the third straight line 705 and parallel to the first axis. It is to be understood that when holding the first trigger 791, the operator can rotate the second sleeve 794 with a thumb or a thumb and an index finger.

The second transmission portion 3941 is connected to the first shift lever 795. The first shift lever 795 is disposed along a direction perpendicular to the fourth straight line 706. A first elongated slot 7941 is disposed on the inner sidewall of the second sleeve 794 along a radial direction, and the width of the first elongated slot 7941 is adapted to the diameter of the first shift lever 795. Specifically, the width of the first elongated slot 7941 is slightly greater than the diameter of the first shift lever 795 so that an end of the first shift lever 795 may be inserted into the first elongated slot 7941, so as to meet an assembly requirement. The first elongated slot 7941 extends along the axis of the second sleeve 794. It is to be understood that the length direction of the first elongated slot 7941 is parallel to or coincides with the direction of the fourth straight line 706. The first connecting portion 792 is configured to be hollow inside. A second slide slot 793 is disposed on the outer wall of the first connecting portion 792 and causes the inside of the first connecting portion 792 to communicate with the outside. The part of the first shift lever 795 connected to the second transmission portion 3941 is disposed in the first connecting portion 792. At least one end of the first shift lever 795 extends out of the first connecting portion 792 from the second slide slot 793 and then is embedded in the first elongated slot 7941. The second slide slot 793 includes a first stop position 7931 close to the first trigger 791 and a second stop position 7932 close to the first limiting structure 7912. It is to be understood that the first stop position 7931 is in front of the second stop position 7932. When the first shift lever 795 slides to the first stop position 7931, the second transmission portion 3941 moves forward so that an adjustment member can be driven to deform. When the first shift lever 795 slides to the second stop position 7932, the second transmission portion 3941 is reset or moves backward, and the adjustment member does not deform. Therefore, when the first shift lever 795 is at the first stop position 7931, the second sleeve 794 corresponds to a fourth position or a fifth position. When the shift lever is at the second stop position 7932, the second sleeve 794 corresponds to a third position. Since the second sleeve 794 drives the first shift lever 795 to slide in the second slide slot 793, the first stop position 7931 and the second stop position 7932 are successively disposed along the rotation direction of the second sleeve 794. That is to say, when the second sleeve 794 rotates rightward, the second stop position 7932 is disposed at the right rear of the first stop position 7931. If the second sleeve 794 rotates leftward, the second stop position 7932 is disposed at the left rear of the first stop position 7931. A transition segment 7933 is disposed between the first stop position 7931 and the second stop position 7932 so that the first shift lever 795 can be smoothly moved by the second sleeve 794. A stop segment 7934 is disposed between the first stop position 7931 and the transition segment 7933 so that the first shift lever 795 needs to enter the transition segment 7933 from the first stop position 7931 via the stop segment 7934 under the action of the external force. The stop segment 7934 is a straight segment that is basically parallel to the third straight line 705.

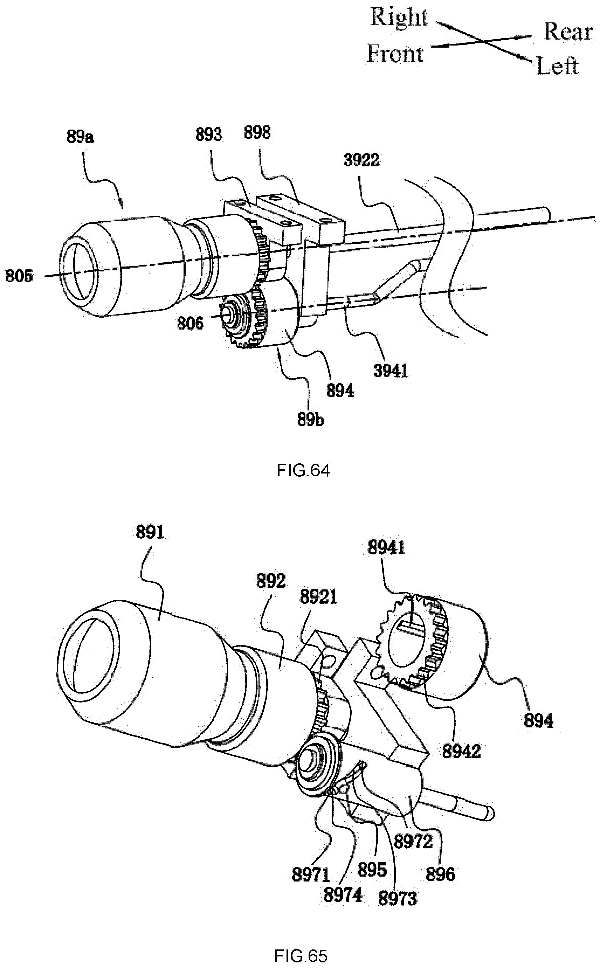

As shown in FIGS. 64 and 65, a miter saw is disclosed in example eight of the present invention. Components of this example the same as or corresponding to those of example seven use the corresponding reference numerals or names in example seven. For simplicity, only the differences between example eight and example seven are described. The miter saw in this example differs from that in example five in specific structures of a first operation portion 89a and a second operation portion 89b and the like.

In this example, the first operation portion 89a includes a first trigger 891, a first limiting structure (not shown in the figure), and a first drive ring 892. The first drive ring 892 is disposed between the first trigger 891 and the first limiting structure (not shown in the figure). The first trigger 891 rotates about a third straight line 805, where the third straight line 805 is parallel to a first axis. An end of the first trigger 891 is fixed to a workbench by a fourth fixing structure 893. The first limiting structure (not shown in the figure) is a threaded structure disposed at a connection of the fourth fixing structure 893. When the first trigger 891 is rotated, the first trigger 891 moves back and forth along the third straight line 805, thereby driving the first transmission rod 3922 to move back and forth.

The second operation portion 89b includes a second sleeve 894 and a first shift lever 895. The second sleeve 894 is disposed below the first trigger 891 and rotates about a fourth straight line 806. The fourth straight line 806 is parallel to the third straight line 805.

The first drive ring 892 is disposed at the rear end of the first trigger 891. The first drive ring 892 rotates about the third straight line 805. A first external gear 8921 is disposed on the first drive ring 892. A second external gear 8942 meshing with the first external gear 8921 is disposed on the second sleeve 894. In this example, when holding the first trigger 891, the operator can rotate the first drive ring 892 with a thumb or a thumb and an index finger, and the first drive ring 892 drives, through gear transmission, the second sleeve 894 to rotate.

The second operation portion 89b further includes a second inner sleeve 896. The second sleeve 894 is sleeved on the outer side of the second inner sleeve 896. Part of the second inner sleeve 896 extends out of the second sleeve 894 to be fixed to the workbench by a fifth fixing structure 898. The second transmission portion 1941 is connected to the first shift lever 895. The first shift lever 895 is disposed along a direction perpendicular to the fourth straight line 806. A first elongated slot 8941 is disposed on the inner sidewall of the second sleeve 894 along a radial direction, and the width of the first elongated slot 8941 is adapted to the diameter of the first shift lever 895. Specifically, the width of the first elongated slot 8941 is slightly greater than the diameter of the first shift lever 895 so that an end of the first shift lever 895 may be inserted into the first elongated slot 8941, so as to meet an assembly requirement. The first elongated slot 8941 extends along the axis of the second sleeve 894. It is to be understood that the length direction of the first elongated slot 8941 is parallel to or coincides with the direction of the fourth straight line 806. The second inner sleeve 896 is configured to be hollow inside. A second slide slot is disposed on the outer wall of the second inner sleeve 896 and causes the inside of the second inner sleeve 896 to communicate with the outside. The part of the first shift lever 895 connected to the second transmission portion 1941 is disposed in the second inner sleeve 896. At least one end of the first shift lever 895 extends out of the second inner sleeve 896 from the second slide slot and then is embedded in the first elongated slot 8941. The second slide slot includes a first stop position 8971 and a second stop position 8972, and the first stop position 8971 is in front of the second stop position 8972. When the first shift lever 895 slides to the first stop position 8971, the second transmission portion 1941 moves forward so that an adjustment member can be driven to deform. When the first shift lever 895 slides to the second stop position 8972, the second transmission portion 1941 is reset or moves backward, and the adjustment member does not deform. Therefore, when the first shift lever 895 is at the first stop position 8971, the second sleeve 894 corresponds to a fourth position or a fifth position. When the first shift lever 895 is at the second stop position 8972, the second sleeve 894 corresponds to a third position. Since the second sleeve 894 drives the first shift lever 895 to slide in the second slide slot, the first stop position 8971 and the second stop position 8972 are successively disposed along the rotation direction of the second sleeve 894. That is to say, when the second sleeve 894 rotates rightward, the second stop position 8972 is disposed at the right rear of the first stop position 8971. If the second sleeve 894 rotates leftward, the second stop position 8972 is disposed at the left rear of the first stop position 8971. A transition segment 8973 is disposed between the first stop position 8971 and the second stop position 8972 so that the first shift lever 895 can be smoothly moved by the second sleeve 894. A stop segment 8974 is disposed between the first stop position 8971 and the transition segment 8973 so that the shift lever needs to enter the transition segment 8973 from the first stop position 8971 via the stop segment 8974 under the action of the external force. The stop segment 8974 is a straight segment that is basically parallel to the third straight line 805.

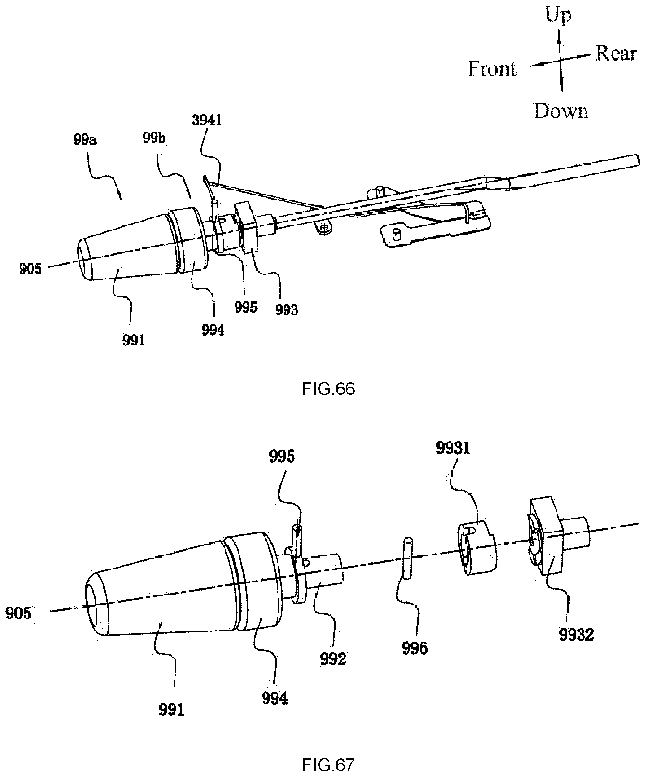

As shown in FIGS. 66 to 68, a miter saw is disclosed in example nine of the present invention. Components of this example the same as or corresponding to those of example seven use the corresponding reference numerals or names in example seven. For simplicity, only the differences between example nine and example seven are described. The miter saw in this example differs from that in example seven in specific structures of a first operation portion 99a and a second operation portion 99b and the like.

In this example, the first operation portion 99a includes a first trigger 991, a first connecting portion 992, and a second clutch portion 993. The second operation portion 99b includes a second sleeve 994 and a second shift lever 995. The second sleeve 994 is rotatably sleeved on the outer side of the first connecting portion 992. The first trigger 991 and the second sleeve 994 each rotate about a third straight line 905, where the third straight line 905 is parallel to a first axis. The second shift lever 995 is disposed along a direction perpendicular to the third straight line 905. A second transmission portion is connected to the second shift lever 995. The second shift lever 995 is formed on or connected to the second sleeve 994.

Part of the first connecting portion 992 extending out of the second sleeve 994 is connected to the second clutch portion 993. The second clutch portion 993 includes a third clutch member 9931 and a fourth clutch member 9932. The third clutch member 9931 is selectively connected to a first transmission rod, and the fourth clutch member 9932 is connected to the first connecting portion 992. The rotation of the fourth clutch member 9932 about the third straight line 905 is restrained by a workbench, and the fourth clutch member 9932 is allowed to reciprocate along the third straight line 905. The third clutch member 9931 forms a synchronous rotation with the first connecting portion 992 through a pin 996 and is restrained from reciprocating along the third straight line 905.

The third clutch member 9931 and the fourth clutch member 9932 each have a surface that meshes with each other. A stepped step is disposed on the surface of the third clutch member 9931 facing the fourth clutch member 9932, the step becomes higher and higher gradually along the direction of the third straight line 905, and a cross section is formed after the step reaches a certain height. The surface of the fourth clutch member 9932 facing the third clutch member 9931 also has a shape meshing with the third clutch member 9931.

When the first trigger 991 rotates about the third straight line 905, that is, from a second position to a first position, the first trigger 991 drives the third clutch member 9931 to rotate about the third straight line 905, and the surface of the fourth clutch member 9932 and the surface of the third clutch member 9931 that mesh with each other are subjected to a change. Further, the third clutch member 9931 pushes the fourth clutch member 9932 to move backward along the direction of the third straight line 905 so that the first transmission rod is pushed to abut against a base and a second locking mechanism locks the rotation between the workbench and the base.

When the second sleeve 994 rotates about the third straight line 905, the second shift lever 995 also rotates about the third straight line 905, and the second transmission portion moves along the direction of the third straight line 905, driving an adjustment member to deform.

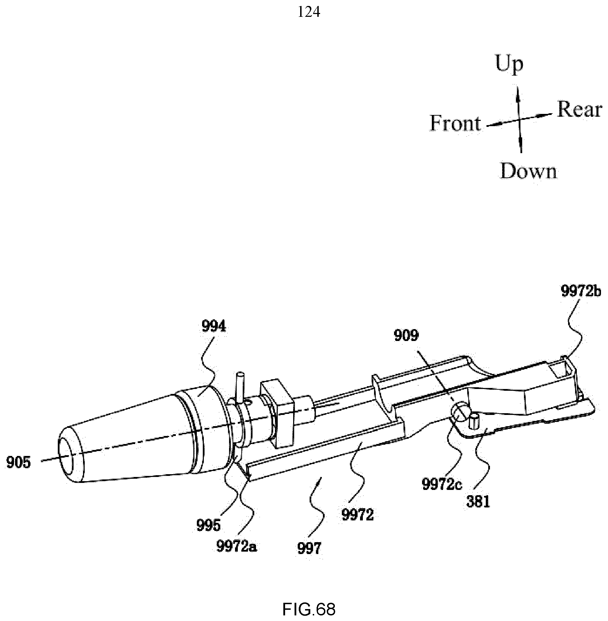

As shown in FIG. 68, in another alternative example, a second transmission assembly 997 includes a flap 9972 and a second transmission portion (not shown in the figure). A first end 9972a of the flap is connected to the second shift lever 995, a second end 9972b of the flap is connected to the second transmission portion (not shown in the figure), and the second transmission portion (not shown in the figure) is connected to an adjustment member 381. The first end 9972a of the flap and the second end 9972b of the flap are connected to the workbench by a flap rotating shaft 9972c between the first end 9972a of the flap and the second end 9972b of the flap. The axis 909 of the flap rotating shaft 9972c is perpendicular to the third straight line 905. The flap 9972 oscillates about the axis 909 of the flap rotating shaft 9972c. It is to be understood that the first end 9972a of the flap and the second end 9972b of the flap 9972 perform opposite movements along the direction perpendicular to the third straight line 905. That is to say, when the first end 9972a of the flap moves downward, the second end 9972b of the flap 9972 moves upward. In this example, the flap 9972 is disposed below the second sleeve 994, and the second shift lever 995 at least partially extends downward and abuts against the flap 9972. When the second sleeve 994 is at a third position, the flap 9972 does not drive the adjustment member to deform, and the adjustment member keeps in contact with the base. It is to be understood that in this case, the first end 9972a of the flap is higher than the second end 9972b of the flap, the first end 9972a of the flap is flush with the second end 9972b of the flap, or the first end 9972a of the flap is slightly lower than the second end 9972b of the flap. When the second sleeve 994 continues rotating to a fourth position, the second shift lever 995 moves toward the first end of the flap 9972, the second shift lever 995 pushes the first end 9972a of the flap, the first end 9972a of the flap moves downward, and the second end 9972b of the flap moves upward so that the second transmission portion (not shown in the figure) is driven to move upward to cause the adjustment member to deform.

## Claims

1. A miter saw, comprising:
a workbench (12) for placing a workpiece;
a cutting mechanism (11) used for completing a cutting operation on the workpiece and
rotating relative to the workbench about a first axis (101);
a support base (123) connected to the cutting mechanism and the workbench; and
a first locking mechanism (14) comprising a first state, a second state, and a third state,
wherein when the first locking mechanism is in the first state, the rotation of the cutting mechanism relative to the workbench about the first axis is locked by the first locking mechanism, when the first locking mechanism is in the second state, the rotation of the cutting mechanism relative to the workbench about the first axis is allowed by the first locking mechanism, when the first locking mechanism is in the third state, the first locking mechanism mates with the support base to position the rotation of the cutting mechanism about the first axis, and the first locking mechanism comprises a first operation member (141) for switching the first state, the second state, and the third state of the first locking mechanism; wherein the first locking mechanism further comprises a positioning pin (142) moving between a positioning position and a non-positioning position, wherein when the first locking mechanism is in the third state, the positioning pin is at the positioning position;
**characterized in that,**
the first locking mechanism further comprises: a transmission wheel (143) comprising a first transmission portion (143a) that protrudes; and a biasing element (144) used for resetting the positioning pin from the non-positioning position to the positioning position, wherein the positioning pin comprises a driven portion (142b) corresponding to a shape of the first transmission portion, and the first transmission portion acts on the driven portion so that the positioning pin arrives at the non-positioning position.

2. The miter saw according to claim 1, wherein a plurality of positioning blocks are disposed on the support base, and when the positioning pin is at the positioning position, the positioning pin is limited by the positioning block (124).

3. The miter saw according to claim 1, wherein the first operation member is operated to move among a first position, a second position, and a third position, wherein when the first operation member is at the first position, the first locking mechanism is in the first state, when the first operation member is at the second position, the first locking mechanism is in the second state, and when the first operation member is at the third position, the first locking mechanism is in the third state.

4. The miter saw according to claim 3, wherein the third position is between the first position and the second position, and the second position is an initial position.

5. The miter saw according to claim 3, wherein the first operation member is drivingly connected to the transmission wheel, and the positioning pin is at the non-positioning position when the first operation member is at the second position.

6. The miter saw according to claim 5, wherein the transmission wheel further comprises a second transmission portion (143b) that protrudes, and the second transmission portion and the first transmission portion are disposed at different positions on the transmission wheel.

7. The miter saw according to claim 6, wherein the first transmission portion and the second transmission portion protrude in different directions.

8. The miter saw according to claim 5, wherein the first locking mechanism further comprises a first locking portion (115) disposed between the transmission wheel and the support base, wherein when the first locking mechanism is in the first state, the transmission wheel presses the first locking portion toward the support base.

9. The miter saw according to claim 8, wherein the support base comprises a locking plate (114) and a second locking portion (116), and the locking plate is disposed between the second locking portion and the first locking portion.

10. The miter saw according to claim 9, wherein the first locking portion is a friction piece with a friction coefficient, and the second locking portion is a friction piece with a friction coefficient.

11. The miter saw according to claim 1, wherein the cutting mechanism comprises a cutting assembly (111), wherein the cutting assembly comprises: a saw blade forming a cutting plane (S); a rack (113) connected to the support base and supporting the cutting assembly; and a guide rail assembly (112) connected to the rack and the cutting assembly and used for implementing a movement of the cutting assembly in the cutting plane.

12. The miter saw according to claim 11, wherein the first locking mechanism is connected to the rack and disposed in a space formed between the guide rail assembly and the support base.

13. The miter saw according to claim 1, wherein an amount of the first operation member is one.

## Patentansprüche

1. Eine Gehrungssäge, umfassend:
eine Werkbank (12) zum Platzieren eines Werkstücks;
einen Schneidemechanismus (11), der zum Ausführen eines Schneidvorgangs an dem Werkstück verwendet wird und sich relativ zur Werkbank um eine erste Achse (101) dreht;
eine Trägerbasis (123), die mit dem Schneidemechanismus und der Werkbank verbunden ist; und
einen ersten Verriegelungsmechanismus (14), umfassend einen ersten Zustand, einen zweiten Zustand und einen dritten Zustand, wobei, wenn sich der erste Verriegelungsmechanismus im ersten Zustand befindet, die Drehung des Schneidemechanismus relativ zur Werkbank um die erste Achse durch den ersten Verriegelungsmechanismus verriegelt ist, wenn sich der erste Verriegelungsmechanismus im zweiten Zustand befindet, die Drehung des Schneidemechanismus relativ zur Werkbank um die erste Achse durch den ersten Verriegelungsmechanismus erlaubt ist, wenn sich der erste Verriegelungsmechanismus im dritten Zustand befindet, der erste Verriegelungsmechanismus mit der Trägerbasis zusammenwirkt, um die Drehung des Schneidemechanismus um die erste Achse zu positionieren, und der erste Verriegelungsmechanismus ein erstes Betätigungselement (141) zum Umschalten des ersten Zustands, des zweiten Zustands und des dritten Zustands des ersten Verriegelungsmechanismus umfasst; wobei der erste Verriegelungsmechanismus ferner einen Positionierstift (142) umfasst, der sich zwischen einer Positionierposition und einer Nicht-Positionierposition bewegt, wobei sich der Positionierstift in der Positionierposition befindet, wenn sich der erste Verriegelungsmechanismus im dritten Zustand befindet;
**dadurch gekennzeichnet, dass**
der erste Verriegelungsmechanismus ferner umfasst: ein Übertragungsrad (143), das einen vorspringenden ersten Übertragungsabschnitt (143a) umfasst; und ein Vorspannelement (144), das zum Rücksetzen des Positionierstifts von der Nicht-Positionierposition in die Positionierposition verwendet wird, wobei der Positionierstift einen angetriebenen Abschnitt (142b) umfasst, der einer Form des ersten Übertragungsabschnitts entspricht, und der erste Übertragungsabschnitt auf den angetriebenen Abschnitt einwirkt, sodass der Positionierstift an die Nicht-Positionierposition gelangt.

2. Gehrungssäge nach Anspruch 1, wobei eine Vielzahl von Positionierblöcken an der Trägerbasis angeordnet ist und wobei, wenn sich der Positionierstift in der Positionierposition befindet, der Positionierstift durch den Positionierblock (124) begrenzt wird.

3. Gehrungssäge nach Anspruch 1, wobei das erste Betätigungselement betätigt wird, um sich zwischen einer ersten Position, einer zweiten Position und einer dritten Position zu bewegen, wobei, wenn sich das erste Betätigungselement in der ersten Position befindet, sich der erste Verriegelungsmechanismus im ersten Zustand befindet, wenn sich das erste Betätigungselement in der zweiten Position befindet, sich der erste Verriegelungsmechanismus im zweiten Zustand befindet, und wenn sich das erste Betätigungselement in der dritten Position befindet, sich der erste Verriegelungsmechanismus im dritten Zustand befindet.

4. Gehrungssäge nach Anspruch 3, wobei die dritte Position zwischen der ersten Position und der zweiten Position liegt und die zweite Position eine Ausgangsposition ist.

5. Gehrungssäge nach Anspruch 3, wobei das erste Betätigungselement antreibend mit dem Übertragungsrad verbunden ist und sich der Positionierstift in der Nicht-Positionierposition befindet, wenn sich das erste Betätigungselement in der zweiten Position befindet.

6. Gehrungssäge nach Anspruch 5, wobei das Übertragungsrad ferner einen vorspringenden zweiten Übertragungsabschnitt (143b) umfasst und wobei der zweite Übertragungsabschnitt und der erste Übertragungsabschnitt an unterschiedlichen Positionen auf dem Übertragungsrad angeordnet sind.

7. Gehrungssäge nach Anspruch 6, wobei der erste Übertragungsabschnitt und der zweite Übertragungsabschnitt in unterschiedliche Richtungen vorspringen.

8. Gehrungssäge nach Anspruch 5, wobei der erste Verriegelungsmechanismus ferner einen ersten Verriegelungsabschnitt (115) umfasst, der zwischen dem Übertragungsrad und der Trägerbasis angeordnet ist, wobei, wenn sich der erste Verriegelungsmechanismus im ersten Zustand befindet, das Übertragungsrad den ersten Verriegelungsabschnitt in Richtung der Trägerbasis drückt.

9. Gehrungssäge nach Anspruch 8, wobei die Trägerbasis eine Verriegelungsplatte (114) und einen zweiten Verriegelungsabschnitt (116) umfasst und wobei die Verriegelungsplatte zwischen dem zweiten Verriegelungsabschnitt und dem ersten Verriegelungsabschnitt angeordnet ist.

10. Gehrungssäge nach Anspruch 9, wobei der erste Verriegelungsabschnitt ein Reibstück mit einem Reibungskoeffizienten ist und der zweite Verriegelungsabschnitt ein Reibstück mit einem Reibungskoeffizienten ist.

11. Gehrungssäge nach Anspruch 1, wobei der Schneidemechanismus eine Schneidbaugruppe (111) umfasst, wobei die Schneidbaugruppe umfasst: ein Sägeblatt, das eine Schneidebene (S) bildet; einen Tragrahmen (113), der mit der Trägerbasis verbunden ist und die Schneidbaugruppe trägt; und eine Führungsschienenbaugruppe (112), die mit dem Tragrahmen und der Schneidbaugruppe verbunden ist und zum Ausführen einer Bewegung der Schneidbaugruppe in der Schneidebene verwendet wird.

12. Gehrungssäge nach Anspruch 11, wobei der erste Verriegelungsmechanismus mit dem Tragrahmen verbunden ist und in einem Raum angeordnet ist, der zwischen der Führungsschienenbaugruppe und der Trägerbasis gebildet wird.

13. Gehrungssäge nach Anspruch 1, wobei die Anzahl des ersten Betätigungselements eins beträgt.

## Revendications

1. Scie à onglet, comprenant :
un établi (12) destiné à placer une pièce à usiner ;
un mécanisme de coupe (11) utilisé pour réaliser une opération de coupe sur la pièce à usiner et tournant par rapport à l'établi autour d'un premier axe (101) ;
une base de support (123) reliée au mécanisme de coupe et à l'établi ; et
un premier mécanisme de verrouillage (14) comprenant un premier état, un deuxième état et un troisième état, dans lequel, lorsque le premier mécanisme de verrouillage est dans le premier état, la rotation du mécanisme de coupe par rapport à l'établi autour du premier axe est verrouillée par le premier mécanisme de verrouillage, lorsque le premier mécanisme de verrouillage est dans le deuxième état, la rotation du mécanisme de coupe par rapport à l'établi autour du premier axe est permise par le premier mécanisme de verrouillage, lorsque le premier mécanisme de verrouillage est dans le troisième état, le premier mécanisme de verrouillage coopère avec la base de support pour positionner la rotation du mécanisme de coupe autour du premier axe, et le premier mécanisme de verrouillage comprend un premier élément d'actionnement (141) pour commuter le premier état, le deuxième état et le troisième état du premier mécanisme de verrouillage ; dans lequel le premier mécanisme de verrouillage comprend en outre une goupille de positionnement (142) se déplaçant entre une position de positionnement et une position de non-positionnement, dans lequel, lorsque le premier mécanisme de verrouillage est dans le troisième état, la goupille de positionnement est à la position de positionnement ;
**caractérisé en ce que,**
le premier mécanisme de verrouillage comprend en outre : une roue de transmission (143) comprenant une première partie de transmission (143a) saillante ; et un élément de biaisage (144) utilisé pour réinitialiser la goupille de positionnement de la position de non-positionnement à la position de positionnement, dans lequel la goupille de positionnement comprend une partie entraînée (142b) correspondant à une forme de la première partie de transmission, et la première partie de transmission agit sur la partie entraînée de sorte que la goupille de positionnement atteigne la position de non-positionnement.

2. Scie à onglet selon la revendication 1, dans laquelle une pluralité de blocs de positionnement est disposée sur la base de support, et lorsque la goupille de positionnement est à la position de positionnement, la goupille de positionnement est limitée par le bloc de positionnement (124).

3. Scie à onglet selon la revendication 1, dans laquelle le premier élément d'actionnement est actionné pour se déplacer entre une première position, une deuxième position et une troisième position, dans laquelle, lorsque le premier élément d'actionnement est à la première position, le premier mécanisme de verrouillage est dans le premier état, lorsque le premier élément d'actionnement est à la deuxième position, le premier mécanisme de verrouillage est dans le deuxième état, et lorsque le premier élément d' actionnement est à la troisième position, le premier mécanisme de verrouillage est dans le troisième état.

4. Scie à onglet selon la revendication 3, dans laquelle la troisième position est entre la première position et la deuxième position, et la deuxième position est une position initiale.

5. Scie à onglet selon la revendication 3, dans laquelle le premier élément d'actionnement est relié en entraînement à la roue de transmission, et la goupille de positionnement est à la position de non-positionnement lorsque le premier élément d'actionnement est à la deuxième position.

6. Scie à onglet selon la revendication 5, dans laquelle la roue de transmission comprend en outre une deuxième partie de transmission (143b) saillante, et la deuxième partie de transmission et la première partie de transmission sont disposées à des positions différentes sur la roue de transmission.

7. Scie à onglet selon la revendication 6, dans laquelle la première partie de transmission et la deuxième partie de transmission font saillie dans des directions différentes.

8. Scie à onglet selon la revendication 5, dans laquelle le premier mécanisme de verrouillage comprend en outre une première partie de verrouillage (115) disposée entre la roue de transmission et la base de support, dans laquelle, lorsque le premier mécanisme de verrouillage est dans le premier état, la roue de transmission presse la première partie de verrouillage vers la base de support.

9. Scie à onglet selon la revendication 8, dans laquelle la base de support comprend une plaque de verrouillage (114) et une deuxième partie de verrouillage (116), et la plaque de verrouillage est disposée entre la deuxième partie de verrouillage et la première partie de verrouillage.

10. Scie à onglet selon la revendication 9, dans laquelle la première partie de verrouillage est une pièce de friction avec un coefficient de frottement, et la deuxième partie de verrouillage est une pièce de friction avec un coefficient de frottement.

11. Scie à onglet selon la revendication 1, dans laquelle le mécanisme de coupe comprend un ensemble de coupe (111), dans lequel l'ensemble de coupe comprend : une lame de scie formant un plan de coupe (S) ; un bâti (113) relié à la base de support et supportant l'ensemble de coupe ; et un ensemble de rail de guidage (112) relié au bâti et à l'ensemble de coupe et utilisé pour réaliser un mouvement de l'ensemble de coupe dans le plan de coupe.

12. Scie à onglet selon la revendication 11, dans laquelle le premier mécanisme de verrouillage est relié au bâti et disposé dans un espace formé entre l'ensemble de rail de guidage et la base de support.

13. Scie à onglet selon la revendication 1, dans laquelle le nombre du premier élément d'actionnement est un.
